(19) Europäisches Patentamt
European Patent Office
Office européen des brevets

(11) **EP 4 691 830 A1**

(12) **EUROPEAN PATENT APPLICATION**
published in accordance with Art. 153(4) EPC

(43) Date of publication:
**11.02.2026 Bulletin 2026/07**

(21) Application number: **24780285.3**

(22) Date of filing: **26.03.2024**

(51) International Patent Classification (IPC):
***B60L 15/20*** *(2006.01)* ***B60L 9/18*** *(2006.01)*

(52) Cooperative Patent Classification (CPC):
**B60L 9/18; B60L 15/20**

(86) International application number:
**PCT/JP2024/011907**

(87) International publication number:
**WO 2024/204172 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023057299**

(71) Applicant: **HONDA MOTOR CO., LTD.**
**Tokyo 105-8404 (JP)**

(72) Inventor: **SAKAGAMI, Kyohei**
**Wako-shi, Saitama 351-0193 (JP)**

(74) Representative: **Weickmann & Weickmann PartmbB**
**Postfach 860 820**
**81635 München (DE)**

# (54) VEHICLE CONTROL DEVICE, VEHICLE, AND VEHICLE CONTROL METHOD

(57) A vehicle control device (26) for controlling a vehicle (10) that can turn according to a difference between the wheel speed of a left drive wheel (14L) and the wheel speed of a right drive wheel (14R), wherein: the vehicle control device calculates a target wheel speed for the left drive wheel and a target wheel speed for the right drive wheel by using a target vehicle speed, a target yaw rate, a first correction value that corresponds to a yaw rate component generated due to slip of the left drive wheel and slip of the right drive wheel, and a second correction value that corresponds to a yaw rate component generated due to the grounding surface shape of the left drive wheel and the grounding surface shape of the right drive wheel; and the vehicle control device controls the rotation speed of left and right driving motors on the basis of the target wheel speeds for the left and right drive wheels.

FIG. 2

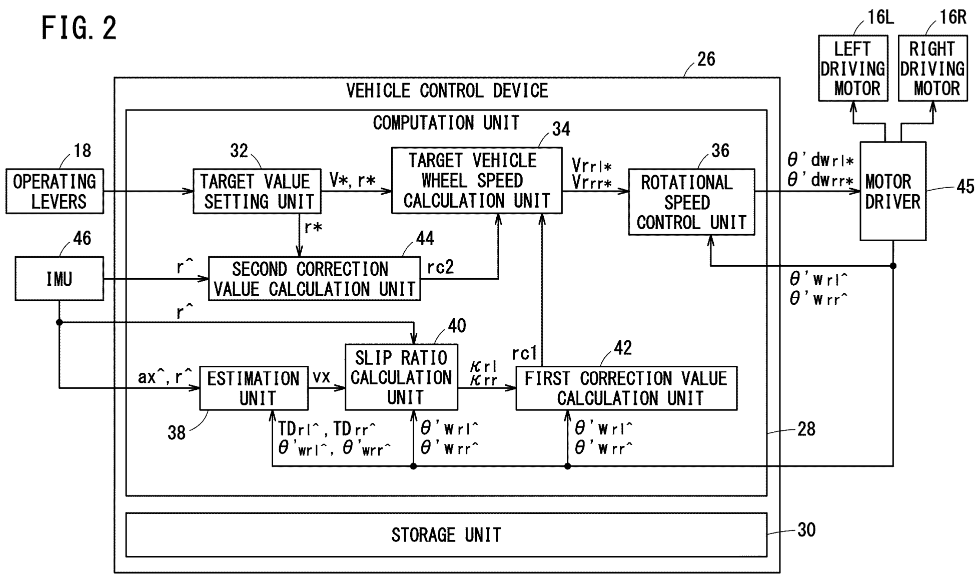


EP 4 691 830 A1

Processed by Luminess, 75001 PARIS (FR)

## Description

### TECHNICAL FIELD

The present invention relates to a vehicle control device, a vehicle, and a vehicle control method.

### BACKGROUND ART

US 8838311 B2 discloses a riding electric lawn mower (vehicle) in which a left driving wheel and a right driving wheel are driven by motors, respectively. When the riding electric lawn mower traverses an inclined surface, the riding electric lawn mower offsets the driving force of the left driving wheel and the driving force of the right driving wheel based on the bank angle of the inclined surface in order to improve the traveling of the vehicle in a straightforward manner.

### SUMMARY OF THE INVENTION

The technique disclosed in US 8838311 B2 has a problem that the traveling in a straightforward manner deteriorates due to disturbances such as a difference between a slip ratio of the left driving wheel and a slip ratio of the right driving wheel, and a difference between the shape of the contact ground road surface with which the left driving wheel is in contact and the contact ground road surface with which the right driving wheel is in contact, and thus satisfactory robustness cannot be obtained.
The present invention has the object of solving the aforementioned problem.
A first aspect of the present invention is characterized by a vehicle control device configured to control a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the vehicle control device including a target value setting unit configured to set a target vehicle speed and a target yaw rate, a first correction value calculation unit configured to calculate a first correction value corresponding to a yaw rate component generated due to a slip of the left driving wheel and a slip of the right driving wheel, a second correction value calculation unit configured to calculate a second correction value corresponding to a yaw rate component generated due to a contact ground surface shape of the left driving wheel and a contact ground surface shape of the right driving wheel, a target vehicle wheel speed calculation unit configured to calculate a target vehicle wheel speed of the left driving wheel and a target vehicle wheel speed of the right driving wheel by using the target vehicle speed, the target yaw rate, the first correction value, and the second correction value, and a rotational speed control unit configured to control a rotational speed of the left driving motor based on the target vehicle wheel speed of the left driving wheel, and control a rotational speed of the right driving motor based on the target vehicle wheel speed of the right driving wheel.
A second aspect of the present invention is characterized by a vehicle being capable of turning based on a difference between the vehicle wheel speed of the left driving wheel and the vehicle wheel speed of the right driving wheel, and including the vehicle control device according to the first aspect.
A third aspect of the present invention is characterized by a vehicle control method for controlling a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the method including a target value setting step of setting a target vehicle speed and a target yaw rate, a first correction value calculation step of calculating a first correction value corresponding to a yaw rate component generated due to a slip of the left driving wheel and a slip of the right driving wheel, a second correction value calculation step of calculating a second correction value corresponding to a yaw rate component generated due to a contact ground surface shape of the left driving wheel and a contact ground surface shape of the right driving wheel, a target vehicle wheel speed calculation step of calculating a target vehicle wheel speed of the left driving wheel and a target vehicle wheel speed of the right driving wheel by using the target vehicle speed, the target yaw rate, the first correction value, and the second correction value, and a rotational speed control step of controlling a rotational speed of the left driving motor based on the target vehicle wheel speed of the left driving wheel, and of controlling a rotational speed of the right driving motor based on the target vehicle wheel speed of the right driving wheel.
According to the present invention, the robustness of the vehicle can be improved.

### BRIEF DESCRIPTION OF DRAWINGS

[FIG. 1] FIG. 1 is a perspective view of a vehicle;

[FIG. 2] FIG. 2 is a block diagram of a vehicle control device;
[FIG. 3] FIG. 3 is a gain map;
[FIG. 4] FIG. 4 is a block diagram of a second correction value calculation unit;
[FIG. 5] FIG. 5 is a schematic diagram of a road surface shape having irregularities;
[FIG. 6] FIG. 6 is a diagram for explaining a yaw angle fluctuation caused by a difference between a path length of a left driving wheel and a path length of a right driving wheel;
[FIG. 7] FIG. 7 is a flowchart of a driving motor control carried out in the vehicle control device;
[FIG. 8] FIG. 8 is a block diagram of the vehicle control device;
[FIG. 9] FIG. 9 is an image diagram showing a relationship between a vehicle body speed, a vehicle wheel speed of the left driving wheel, and a vehicle wheel speed of the right driving wheel;
[FIG. 10] FIG. 10 is an image diagram showing a relationship between the vehicle body speed, the vehicle wheel speed of the left driving wheel, and the vehicle wheel speed of the right driving wheel;
[FIG. 11] FIG. 11 is an image diagram showing a relationship between the vehicle body speed, the vehicle wheel speed of the left driving wheel, and the vehicle wheel speed of the right driving wheel;
[FIG. 12] FIG. 12 is an image diagram showing a relationship between the vehicle body speed, the vehicle wheel speed of the left driving wheel, and the vehicle wheel speed of the right driving wheel; and
[FIG. 13] FIG. 13 is a flowchart of a vehicle body speed estimation process carried out in the vehicle control device.

## DETAILED DESCRIPTION OF THE INVENTION

### [First Embodiment]

### [Configuration of Vehicle]

FIG. 1 is a perspective view of a vehicle 10. The vehicle 10 is an electrically powered riding lawn mower.

The vehicle 10 is equipped with a left front wheel 12L, a right front wheel 12R, a left driving wheel 14L as a left rear wheel, and a right driving wheel 14R as a right rear wheel. The left front wheel 12L and the right front wheel 12R are caster wheels, and the direction thereof can be freely changed. The left driving wheel 14L is driven by a left driving motor 16L (see FIG. 2), and the right driving wheel 14R is driven by a right driving motor 16R (see FIG. 2). The vehicle 10 does not have a steering wheel, and is capable of turning by a difference between a wheel speed $Vr_{rl}$ of the left driving wheel 14L and a wheel speed $Vr_{rr}$ of the right driving wheel 14R.

The vehicle 10 is equipped with a pair of left and right operating levers 18, and a seat 20. A non-illustrated occupant (an operator) sits on the seat 20, and operates the operating levers 18. By the operating levers 18 being operated, the vehicle 10 moves forward, moves rearward, and turns.

The vehicle 10 is equipped with a lawn mower deck 22. A plurality of blades 24 are provided on the lawn mower deck 22. By the blades 24 being rotated, mowing of the grass is carried out.

### [Configuration of Vehicle Control Device]

FIG. 2 is a block diagram of a vehicle control device 26. The vehicle control device 26 is mounted on the vehicle 10, and controls the vehicle 10. The vehicle control device 26 includes a computation unit 28 and a storage unit 30.

The computation unit 28, for example, is a processor such as a CPU (Central Processing Unit), a GPU (Graphics Processing Unit), or the like. The computation unit 28 includes a target value setting unit 32, a target vehicle wheel speed calculation unit 34, a rotational speed control unit 36, an estimation unit 38, a slip ratio calculation unit 40, a first correction value calculation unit 42, and a second correction value calculation unit 44. The target value setting unit 32, the target vehicle wheel speed calculation unit 34, the rotational speed control unit 36, the estimation unit 38, the slip ratio calculation unit 40, the first correction value calculation unit 42, and the second correction value calculation unit 44 are realized by executing in the computation unit 28 a program that is stored in the storage unit 30. At least a portion of the target value setting unit 32, the target vehicle wheel speed calculation unit 34, the rotational speed control unit 36, the estimation unit 38, the slip ratio calculation unit 40, the first correction value calculation unit 42, and the second correction value calculation unit 44 may be realized by an integrated circuit such as an ASIC (Application Specific Integrated Circuit) or an FPGA (Field-Programmable Gate Array) or the like. At least a portion of the target value setting unit 32, the target vehicle wheel speed calculation unit 34, the rotational speed control unit 36, the estimation unit 38, the slip ratio calculation unit 40, the first correction value calculation unit 42, and the second correction value calculation unit 44 may be realized by an electronic circuit including a discrete device.

The storage unit 30 is constituted from a non-illustrated volatile memory and a non-illustrated non-volatile memory, which are computer-readable storage media. The volatile memory, for example, is a RAM (Random Access Memory) or the like. The nonvolatile memory is, for example, a read only memory (ROM), a flash memory, or the like. Data, etc. may be stored, for example, in the volatile memory. Programs, tables, maps, and the like are stored, for example, in the non-volatile memory. At least a portion of the storage unit 30 may be provided in the processor, the integrated circuit, or the like, which were described above. At least a portion of the storage unit 30 may be mounted on a device that is connected to the vehicle 10 by a network.

The target value setting unit 32 sets a target vehicle speed V* and a target yaw rate r* based on an operated amount of the operating levers 18.

The target vehicle wheel speed calculation unit 34 calculates a target vehicle wheel speed $Vr_{rl}$* of the left driving wheel 14L and a target vehicle wheel speed $Vr_{rr}$* of the right driving wheel 14R, based on the target vehicle speed V*, the target yaw rate r*, a first correction value rc1, and a second correction value rc2.

The first correction value rc1 is a correction value for correcting a yaw rate component that is generated due to the slip of the left driving wheel 14L and the slip of the right driving wheel 14R. The second correction value rc2 is a correction value for correcting a yaw rate component that is generated due to a contact ground surface shape of the left driving wheel 14L and a contact ground surface shape of the right driving wheel 14R. A method of calculating the first correction value rc1 and a method of calculating the second correction value rc2 will be described in detail later.

The target vehicle wheel speed $Vr_{rl}$* of the left driving wheel 14L is calculated by the following equation (1). The target vehicle wheel speed $Vr_{rr}$* of the right driving wheel 14R is calculated by the following Equation (2).

$$Vr_{rl} *= V * -\frac{dr}{2}\{r * +H(rc1 + rc2)\} \cdots (1)$$

$$Vr_{rr} *= V * +\frac{dr}{2}\{r * +H(rc1 + rc2)\} \cdots (2)$$

The term H in Equation (1) and Equation (2) is a gain. FIG. 3 is a map of the gain H. When the vehicle 10 is about to turn, the target yaw rate r* is large, and the magnitude of the gain H is set to zero. On the other hand, when the vehicle 10 is about to travel straight forward, the target yaw rate r* is set to be small and the gain H is set to be large. Thus, the target vehicle wheel speed $Vr_{rl}$* and the target vehicle wheel speed $Vr_{rr}$* are calculated in consideration of the components of the first and second correction values rc1 and rc2, thereby improving the traveling of the vehicle 10 in a straightforward manner. Further, also during turning, the components of the first correction values rc1 and the components of the second correction values rc2 may be used in the calculation of the target vehicle wheel speed $Vr_{rl}$* and the target vehicle wheel speed $Vr_{rr}$* .

The rotational speed control unit 36 controls the rotational speed of the left driving motor 16L. The rotational speed control unit 36 sets a rotational speed command value $\theta'dw_{rl}$ based on the target vehicle wheel speed $Vr_{rl}$* and the rotational speed $\theta'w_{rl}$^ of the left driving wheel 14L, and outputs the rotational speed command value $\theta'dw_{rl}$ to a motor driver 45. The motor driver 45 drives the left driving motor 16L in accordance with the rotational speed command value $\theta'dw_{rl}$.

The rotational speed control unit 36 controls the rotational speed of the right driving motor 16R. The rotational speed control unit 36 sets a rotational speed command value $\theta'dw_{rr}$ based on the target vehicle wheel speed $Vr_{rr}$* and the rotational speed $\theta'w_{rr}$^ of the right driving wheel 14R, and outputs the rotational speed command value $\theta'dw_{rr}$ to the motor driver 45. The motor driver 45 drives the left driving motor 16L in accordance with the rotational speed command value $\theta'dw_{rr}$.

In the vehicle 10 according to the present embodiment, the left driving wheel 14L and the left driving motor 16L are directly connected, and the rotational speed of the left driving motor 16L is the same as the rotational speed of the left driving wheel 14L. In the case that a transmission is disposed between the left driving wheel 14L and the left driving motor 16L, then based on a gear ratio of the transmission, the rotational speed of the left driving motor 16L can be converted into the rotational speed of the left driving wheel 14L. Similarly, in the vehicle 10 according to the present embodiment, a description is given in which the right driving wheel 14R and the right driving motor 16R are directly connected, and the rotational speed of the right driving motor 16R is the same as the rotational speed of the right driving wheel 14R. In the case that a transmission is disposed between the right driving wheel 14R and the right driving motor 16R, then based on a gear ratio of the transmission, the rotational speed of the right driving motor 16R can be converted into the rotational speed of the right driving wheel 14R.

The estimation unit 38 estimates a vehicle body speed vx of the vehicle 10. The vehicle body speed vx is estimated based on a driving torque $TD_{rl}$^ of the left driving wheel 14L, a driving torque $TD_{rr}$^ of the right driving wheel 14R, a rotational speed $\theta'w_{rl}$^ of the left driving wheel 14L, a rotational speed $\theta'w_{rr}$^ of the right driving wheel 14R, a frontward and rearward acceleration ax^ of the vehicle 10, and a yaw rate r^ of the vehicle 10.

The driving torque $TD_{rl}$^ of the left driving wheel 14L, the driving torque $TD_{rr}$^ of the right driving wheel 14R, the rotational speed $\theta'w_{rl}$^ of the left driving wheel 14L, and the rotational speed $\theta'w_{rr}$^ of the right driving wheel 14R are detected in the motor driver 45 that drives the left driving motor 16L and the right driving motor 16R.

The frontward and rearward acceleration ax^ and the yaw rate r^ are detected by an inertial measurement unit (hereinafter referred to as an IMU) 46. Apart therefrom, the IMU 46 also detects a lateral acceleration ay^, an upper and lower acceleration az^, a roll rate p^, and a pitch rate q^ of the vehicle 10.

Hereinafter, a value in which the symbol "^" is included indicates a detected value, or alternatively, a value that was determined from the detected value and a specification value of the vehicle 10. Hereinafter, the detected values may be referred to as observed quantities. A description will be given in detail later concerning a method of estimating the vehicle body speed vx in the estimation unit 38.

The slip ratio calculation unit 40 calculates a slip ratio $\kappa_{rl}$ of the left driving wheel 14L and a slip ratio $\kappa_{rr}$ of the right driving wheel 14R. The slip ratio $\kappa_{rl}$ is calculated by the following Equation (3), and the slip ratio $\kappa_{rr}$ is calculated by the following Equation (4).

$$\kappa_{rl} = \frac{Vr_{rl}\wedge - Vcx_{rl}}{|Vcx_{rl}|} \cdots (3)$$

$$\kappa_{rr} = \frac{Vr_{rr}\wedge - Vcx_{rr}}{|Vcx_{rr}|} \cdots (4)$$

$$Vr_{rl}\wedge = Re \cdot \theta' w_{rl}\wedge \cdots (5)$$

$$Vr_{rr}\wedge = Re \cdot \theta' w_{rr}\wedge \cdots (6)$$

$$Vcx_{rl} = vx - \frac{dr}{2} r\wedge \cdots (7)$$

$$Vcx_{rr} = vx + \frac{dr}{2} r\wedge \cdots (8)$$

The term $Vr_{rl}$^ in Equation (3) is a vehicle wheel speed of the left driving wheel 14L, and the term $Vr_{rr}$^ in Equation (4) is the vehicle wheel speed of the right driving wheel 14R. As shown in Equation (5), the vehicle wheel speed $Vr_{rl}$^ is determined from a radius Re of the left driving wheel 14L and the rotational speed $\theta' w_{rl}$^ of the left driving wheel 14L. As shown in Equation (6), the vehicle wheel speed $Vr_{rr}$^ is determined from a radius Re of the right driving wheel 14R, and the rotational speed $\theta' w_{rr}$^ of the right driving wheel 14R.

The term $Vcx_{rl}$ in Equation (3) is a ground speed of the left driving wheel 14L, and the term $Vcx_{rr}$ in Equation (4) is a ground speed of the right driving wheel 14R. The ground speed $Vcx_{rl}$ can also be referred to as an axial speed of the left driving wheel 14L. Similarly, the ground speed $Vcx_{rr}$ can also be referred to as an axial speed of the right driving wheel 14R. As shown in Equation (7), the ground speed $Vcx_{rl}$ is calculated from the vehicle body speed vx and the yaw rate r^. As shown in Equation (8), the ground speed $Vcx_{rr}$ is calculated from the vehicle body speed vx and the yaw rate r^. The term dr in Equation (7) and Equation (8) represents a tread width between the left driving wheel 14L and the right driving wheel 14R.

The first correction value calculation unit 42 calculates a first correction value rc1. The first correction value rc1 is calculated by the following Equation (9).

$$rc1 = \frac{1}{dr}\left(Vr_{rr}\wedge \frac{\kappa r_{rr}}{1+\kappa r_{rr}} - Vr_{rl}\wedge \frac{\kappa r_{rl}}{1+\kappa r_{rl}}\right) \cdots (9)$$

$$\kappa r_{rl} = \begin{cases} \kappa_{rl}(Vcx_{rl} \geq 0) \\ -\kappa_{rl}(Vcx_{rl} < 0) \end{cases}$$

$$\kappa r_{rr} = \begin{cases} \kappa_{rr}(Vcx_{rr} \geq 0) \\ -\kappa_{rr}(Vcx_{rr} < 0) \end{cases}$$

The reason why the first correction value rc1 for correcting the yaw rate component caused by the slip of the left driving wheel 14L and the slip of the right driving wheel 14R can be obtained by Equation (9) will be described in detail later.

The second correction value calculation unit 44 calculates a second correction value rc2. FIG. 4 is a block diagram of the second correction value calculation unit 44. As shown in FIG. 4, the second correction value rc2 is obtained by multiplying a deviation of the yaw rate r^, which has been subjected to the dead-zone process, with respect to the target yaw rate r*, which has been subjected to the dead-zone process, by a gain Kγ. The dead-zone process is performed to eliminate the influence of the zero error of the IMU46 on the calculation by the second correction value calculation unit 44.

The reason why the second correction value rc2 for correcting the yaw rate component caused by the contact ground surface shape of the left driving wheel 14L and the contact ground surface shape of the right driving wheel 14R can be obtained in this manner will be described in detail later.

[First Correction Value]

As shown in the aforementioned Equation (9), the first correction value rc1 can be obtained by using the vehicle wheel speed $Vr_{rl}$^ and the slip ratio $\kappa_{rl}$ of the left driving wheel 14L and the vehicle wheel speed $Vr_{rr}$^ and the slip ratio $\kappa_{rr}$ of the right driving wheel 14R. The reason why the first correction value rc1 for correcting the yaw rate component caused by the slip of the left driving wheel 14L and the slip of the right driving wheel 14R can be obtained in the manner mentioned above will be described in detail later.

In the case that neither the left driving wheel 14L nor the right driving wheel 14R slips, the theoretical yaw rate rt of the vehicle 10 is calculated by the following Equation (10) using the vehicle wheel speed $Vr_{rl}$^ of the left driving wheel 14L and the vehicle wheel speed $Vr_{rr}$^ of the right driving wheel 14R.

$$rt = \frac{Vr_{rr}\text{^} - Vr_{rl}\text{^}}{dr} \cdots (10)$$

In the case that the slip of the left driving wheel 14L and the slip of the right driving wheel 14R is taken into consideration, the yaw rate rs of the vehicle 10 is calculated by the following Equation (11) using the ground speed $Vcx_{rl}$ of the axle of the left driving wheel 14L and the ground speed $Vcx_{rr}$ of the axle of the right driving wheel 14R.

$$rs = \frac{Vcx_{rr} - Vcx_{rl}}{dr} \cdots (11)$$

By obtaining the difference between the theoretical yaw rate rt and the yaw rate rs, the yaw rate component re1 generated due to the slip of the left driving wheel 14L and the slip of the right driving wheel 14R can be obtained.

Here, the following Equation (12) is obtained by transforming the above Equation (3). The ground speed $Vcx_{rl}$ of the axle of the left driving wheel 14L is calculated by Equation (12) using the slip ratio $\kappa_{rl}$ of the left driving wheel 14L. Further, the following Equation (13) is obtained by transforming Equation (4). The ground speed $Vcx_{rr}$ of the axle of the right driving wheel 14R is calculated by the following Equation (13) using the slip ratio $\kappa_{rr}$ of the right driving wheel 14R.

$$Vcx_{rl} = \begin{cases} \dfrac{Vr_{rl}\text{^}}{1+\kappa_{rl}}(Vcx_{rl} \geq 0) \\ \dfrac{Vr_{rl}\text{^}}{1-\kappa_{rl}}(Vcx_{rl} < 0) \end{cases} \cdots (12)$$

$$Vcx_{rr} = \begin{cases} \dfrac{Vr_{rr}\text{^}}{1+\kappa_{rr}}(Vcx_{rr} \geq 0) \\ \dfrac{Vr_{rr}\text{^}}{1-\kappa_{rr}}(Vcx_{rr} < 0) \end{cases} \cdots (13)$$

When the ground speed $Vcx_{rl}$ of the axle of the left driving wheel 14L is equal to or greater than 0 (zero) and the

ground speed $Vcx_{rr}$ of the axle of the right driving wheel 14R is equal to or greater than 0 (zero), Equation (11) is rewritten into the following Equation (14) using Equation (12) and Equation (13).

$$rs = \frac{Vr_{rr}\hat{}/(1+\kappa_{rr}) - Vr_{rl}\hat{}/(1+\kappa_{rl})}{dr} \cdots (14)$$

The yaw rate component re1 generated due to the slip of the left driving wheel 14L and the slip of the right driving wheel 14R is obtained by the following Equation (15).

$$\begin{aligned} re1 = rt - rs &= \frac{Vr_{rr}\hat{} - Vr_{rl}\hat{}}{dr} - \frac{Vr_{rr}\hat{}/(1+\kappa_{rr}) - Vr_{rl}\hat{}/(1+\kappa_{rl})}{dr} \\ &= \frac{1}{dr}\left\{Vr_{rr}\hat{}\left(1-\frac{1}{1+\kappa_{rr}}\right) - Vr_{rl}\hat{}\left(1-\frac{1}{1+\kappa_{rl}}\right)\right\} \\ &= \frac{1}{dr}\left(Vr_{rr}\hat{}\frac{\kappa_{rr}}{1+\kappa_{rr}} - Vr_{rl}\hat{}\frac{\kappa_{rl}}{1+\kappa_{rl}}\right) \cdots (15) \end{aligned}$$

When Equation (15) is generalized in consideration of the sign of the ground speed $Vcx_{rl}$ of the axle of the left driving wheel 14L and the sign of the ground speed $Vcx_{rr}$ of the axle of the right driving wheel 14R, the aforementioned Equation (9) can be obtained.

[Second Correction Value]

As described above, the second correction value rc2 is obtained by multiplying the deviation of the yaw rate r^ from the target yaw rate r* by the gain Kγ. The reason why the second correction value rc2 for correcting the yaw rate component caused by the contact ground surface shape of the left driving wheel 14L and the contact ground surface shape of the right driving wheel 14R can be obtained in this manner will be described in detail later.

FIG. 5 is a schematic diagram of a road surface shape having irregularities. In the following description, it is assumed that neither the left driving wheel 14L nor the right driving wheel 14R is slipping.

Here, a path length X and a rolling length S are defined. The path length X is the length of a projection of the path on a plane as shown in FIG. 5 when the path along which the vehicles 10, the left driving wheel 14L, and the right driving wheel 14R move is viewed from the sky above. The rolling length S is a length on the road surface on which the left driving wheel 14L and the right driving wheel 14R move.

The rolling length of the left driving wheel 14L in the case that the vehicle 10 travels a path length ΔX* on a road surface having irregularities during a time Δt is defined as $\Delta S_{rl}$*, and the rolling length of the right driving wheel 14R is defined as $\Delta S_{rr}$*. Further, the path length along which the left driving wheel 14L moves is $\Delta X_{rl}$, and the path length along which the right driving wheel 14R moves is $\Delta X_{rr}$. The rolling length of the left driving wheel 14L in the case that the vehicle 10 travels the path length ΔX* on a flat road surface during a time Δt is defined as $\Delta S_{rl}$ (= ΔX*), and the rolling length of the right driving wheel 14R is defined as $\Delta S_{rr}$ (= ΔX*).

The path length $\Delta X_{rl}$ of the left driving wheel 14L is expressed by the following Equation (16), and the path length $\Delta X_{rr}$ of the right driving wheel 14R is expressed by the following Equation (17).

$$\Delta X_{rl} = \Delta X * \frac{\Delta S_{rl}}{\Delta S_{rl} *} = \frac{\Delta X *^2}{\Delta S_{rl} *} \cdots (16)$$

$$\Delta X_{rr} = \Delta X * \frac{\Delta S_{rr}}{\Delta S_{rr} *} = \frac{\Delta X *^2}{\Delta S_{rr} *} \cdots (17)$$

It is understood from Equations (16) and (17) that the path length $\Delta X_{rl}$ of the left driving wheel 14L and the path length $\Delta X_{rr}$ of the right driving wheel 14R are different from each other when the vehicle 10 moves on the road surface having the irregularities. During the time Δt, the path length $\Delta X_{rl}$ of the left driving wheel 14L and the path length $\Delta X_{rr}$ of the right driving wheel 14R are different, which indicates that the ground speed $Vcx_{rl}$ of the axle of the left driving wheel 14L and the ground speed $Vcx_{rr}$ of the axle of the right driving wheel 14R are different. That is, even if the vehicle wheel speed of the left driving wheel 14L and the vehicle wheel speed of the right driving wheel 14R are made the same, a difference occurs between the ground speed $Vcx_{rl}$ of the axle of the left driving wheel 14L and the ground speed $Vcx_{rr}$ of the axle of the right driving wheel 14R due to the road surface shape, and a yaw rate occurs. A yaw rate error generated by the road surface shape is defined as re2.

FIG. 6 is a diagram for explaining a yaw angle variation $\Delta\psi$ caused by a difference between the path length $\Delta X_{rl}$ of the left driving wheel 14L and the path length $\Delta X_{rr}$ of the right driving wheel 14R. The yaw rate error re2 can be expressed by the following Equation (18) using the yaw angle variation $\Delta\psi$.

$$re2 = \frac{\Delta\psi}{\Delta t} \cdots (18)$$

From FIG. 6, the relationship between the yaw angle variation $\Delta\psi$ and the path lengths $\Delta X_{rl}$ and $\Delta X_{rr}$ is expressed by the following Equation (19), using a tread width dr between the left driving wheel 14L and the right driving wheel 14R.

$$dr \cdot tan\,\Delta\psi = \Delta X_{rr} - \Delta X_{rl} \cdots (19)$$

Here, since the yaw angle variation $\Delta\psi$ is very small, $\tan\Delta\psi$ can be regarded as $\Delta\psi$. Therefore, the yaw angle variation $\Delta\psi$ can be expressed by the following Equation (20).

$$\Delta\psi = \frac{\Delta X_{rr} - \Delta X_{rl}}{dr} \cdots (20)$$

From Equation (18) and Equation (20), the yaw rate error re2 is expressed by the following Equation (21).

$$re2 = \frac{\Delta X_{rr} - \Delta X_{rl}}{dr \cdot \Delta t} \cdots (21)$$

From Equation (21), it is understood that the yaw rate error re2 depends on the difference between the path length $\Delta X_{rl}$ of the left driving wheel 14L and the path length $\Delta X_{rr}$ of the right driving wheel 14R.

Next, it is considered that the yaw rate error re2 is set to 0 (zero). In order to make the yaw rate error re2 0 (zero), the numerator of the right side of Equation (21) should be 0 (zero). In the case that the numerator of the right side of the equation (21) becomes 0 (zero) by adding the correction amount $\Delta Xc_{rl}$ to the path length $\Delta X_{rl}$ of the left driving wheel 14L and adding the correction amount $\Delta Xc_{rr}$ to the path length $\Delta X_{rr}$ of the right driving wheel 14R, the following equation (22) is obtained.

$$(\Delta X_{rr} + \Delta Xc_{rr}) - (\Delta X_{rl} + \Delta Xc_{rl}) = 0 \cdots (22)$$

By transforming Equation (22) using Equation (21), the following Equation (24) is obtained.

$$(\Delta X_{rr} - \Delta X_{rl}) + (\Delta Xc_{rr} - \Delta Xc_{rl}) = 0 \cdots (23)$$

$$\frac{(\Delta Xc_{rr} - \Delta Xc_{rl})}{dr \cdot \Delta t} = -re2 \cdots (24)$$

When Equation (16) and Equation (17) are substituted into Equation (24) and Equation (24) is rearranged, the following Equation (25) is obtained.

$$\frac{(Vcr_{rl}/\alpha_{rr} - Vcr_{rr}/\alpha_{rl})}{dr} = -\frac{1}{\alpha_{rl} \cdot \alpha_{rr}} re2 \cdots (25)$$

$$Vcr_{rl} = \frac{\Delta Xc_{rl}}{\Delta t}, Vcr_{rr} = \frac{\Delta Xc_{rr}}{\Delta t}, \alpha_{rl} = \frac{\Delta X *}{\Delta S_{rl} *}, \alpha_{rr} = \frac{\Delta X *}{\Delta S_{rr} *}$$

From the definition of the rolling length S, the terms $\alpha_{rl}$ and $\alpha_{rr}$ satisfy the relationships of the following Inequalities (26) to (29).

$$0 < \alpha_{rl} \le 1 \cdots (26)$$

$$0 < \alpha_{rr} \le 1 \cdots (27)$$

$$1/\alpha_{rl} \le 1/(\alpha_{rl} \cdot \alpha_{rr}) \cdots (28)$$

$$1/\alpha_{rr} \le 1/(\alpha_{rl} \cdot \alpha_{rr}) \cdots (29)$$

Here, the terms $\alpha_{rl}$ and $\alpha_{rr}$ are ratios of the path length and the rolling length, and the larger the values of $1/\alpha_{rl}$, $1/\alpha_{rr}$, and $1/\alpha_{rl} \cdot \alpha_{rr}$ in Equation (25), the larger the yaw rate component generated due to the contact ground surface shape. From the Inequalities (28) to (29), since the influence of $1/\alpha_{rl} \cdot \alpha_{rr}$ is larger than that of $1/\alpha_{rl}$ and $1/\alpha_{rr}$, the following Equation (30) is obtained by ignoring $1/\alpha_{rl}$ and $1/\alpha_{rr}$ and considering only $1/\alpha_{rl} \cdot \alpha_{rr}$.

$$\begin{aligned}\frac{Vcr_{rr} - Vcr_{rl}}{dr} &= \frac{1}{\alpha_{rl} \cdot \alpha_{rr}} re2 \\ &= K\gamma \cdot re2 \cdots (30)\end{aligned}$$

The left side of Equation (30) is the same as Equation (10) indicating the theoretical yaw rate rt. That is, Equation (30) indicates that in the case where the vehicle 10 moves forward, the second correction value rc2 for correcting the yaw rate component caused by the contact ground surface shape of the left driving wheel 14L and the contact ground surface shape of the right driving wheel 14R is obtained by multiplying the yaw rate error re2 by the gain $K\gamma$.

[Concerning the Estimation of the Vehicle Body Speed]

The estimation unit 38 processes a first state equation and an observation equation in accordance with a first extended Kalman filter, and thereby estimates the vehicle body speed vx, a road surface coefficient $\lambda_{rl}$ of the left driving wheel 14L, and a road surface coefficient $\lambda_{rr}$ of the right driving wheel 14R. The first state equation includes, as state quantities, an estimated value vx of the vehicle body speed, an estimated value $\lambda_{rl}$ of the road surface coefficient of the left driving wheel 14L, and an estimated value $\lambda_{rr}$ of the road surface coefficient of the right driving wheel 14R. The observation equation includes, as observed quantities, an observed value $\theta' w_{rl}$^ of the rotational speed of the left driving wheel 14L, an observed value $\theta' w_{rr}$^ of the rotational speed of the right driving wheel 14R, an observed value ax^ of the frontward and rearward acceleration of the vehicle 10, and an observed value r^ of the yaw rate of the vehicle 10.

The first state equation and the observation equation are set based on a dynamic model of the vehicle 10, a dynamic model of the left driving wheel 14L, and a dynamic model of the right driving wheel 14R. The following Equation (31) is the first state equation, and the following Equation (32) is the observation equation.

$$\frac{d}{dt}\begin{bmatrix}\theta' w_{rl} \\ \theta' w_{rr} \\ vx \\ r \\ \lambda_{rl} \\ \lambda_{rr}\end{bmatrix} = \begin{bmatrix} -\dfrac{Re \cdot Fx_{rl}}{Iw} \\ -\dfrac{Re \cdot Fx_{rr}}{Iw} \\ \dfrac{1}{M}(Fx_{rl} + Fx_{rr}) \\ \dfrac{d_r}{2 \cdot Iz}(Fx_{rl} - Fx_{rr}) \\ k\mu(1 - \lambda_{rl}) \\ k\mu(1 - \lambda_{rr}) \end{bmatrix} + \begin{bmatrix} \dfrac{TD_{rl}}{Iw} \\ \dfrac{TD_{rr}}{Iw} \\ g\,sin\,\phi P - \mu r \cdot g\,cos\,\phi P \\ 0 \\ 0 \\ 0 \end{bmatrix} \cdots (31)$$

$$\begin{bmatrix} Vr_{rl}\hat{} \\ Vr_{rr}\hat{} \\ a_x\hat{} \\ r\hat{} \\ vx\hat{} \\ \lambda_{rl}\hat{} \\ \lambda_{rr}\hat{} \end{bmatrix} = \begin{bmatrix} Re \cdot \theta' w_{rl} \\ Re \cdot \theta' w_{rr} \\ \frac{1}{M}(Fx_{rl} + Fx_{rr} - \mu r \cdot M \cdot g \cos \phi P) \\ r \\ vx \\ \lambda_{rl} \\ \lambda_{rr} \end{bmatrix} \cdots (32)$$

$$Fx_{rl} = \frac{Fz_{rl}}{Fz0_{rl}} \lambda_{rl} \cdot Px2 \cdot \tanh\left(\frac{\kappa T0 \cdot \Phi 0}{2Re \cdot \lambda_{rl} \cdot Px2}\right) \kappa_{rl} \cdots (33)$$

$$Fx_{rr} = \frac{Fz_{rr}}{Fz0_{rr}} \lambda_{rr} \cdot Px2 \cdot \tanh\left(\frac{\kappa T0 \cdot \Phi 0}{2Re \cdot \lambda_{rr} \cdot Px2}\right) \kappa_{rr} \cdots (34)$$

$$Fz_{rl} = Fz0_{rl} \cdot \cos \phi R \cdot \cos \phi P - \frac{h}{2dr} M \cdot ay\hat{} + \frac{h}{2l} M \cdot ax\hat{} \cdots (35)$$

$$Fz_{rr} = Fz0_{rr} \cdot \cos \phi R \cdot \cos \phi P + \frac{h}{2dr} M \cdot ay\hat{} + \frac{h}{2l} M \cdot ax\hat{} \cdots (36)$$

$$\kappa_{rl} = \frac{Vr_{rl}\hat{} - Vcx_{rl}}{|Vcx_{rl}|} \cdots (3)$$

$$\kappa_{rr} = \frac{Vr_{rr}\hat{} - Vcx_{rr}}{|Vcx_{rr}|} \cdots (4)$$

$$Vr_{rl}\hat{} = Re \cdot \theta' w_{rl}\hat{} \cdots (5)$$

$$Vr_{rr}\hat{} = Re \cdot \theta' w_{rr}\hat{} \cdots (6)$$

$$Vcx_{rl} = vx - \frac{dr}{2} r\hat{} \cdots (7)$$

$$Vcx_{rr} = vx + \frac{dr}{2} r\hat{} \cdots (8)$$

As state quantities, the rotational speed $\theta' w_{rl}$ of the left driving wheel 14L, the rotational speed $\theta' w_{rr}$ of the right driving wheel 14R, the vehicle body speed vx, the yaw rate r, the road surface coefficient $\lambda_{rl}$ between the left driving wheel 14L and a contact ground road surface, and the road surface coefficient $\lambda_{rr}$ between the right driving wheel 14R and a contact ground road surface are used in the first state equation and the observation equation. Further, as control inputs, there are used the driving torque $TD_{rl}$ of the left driving wheel 14L, the driving torque $TD_{rr}$ of the right driving wheel 14R, and a pitch angle $\phi P$ of the vehicle 10. Further, as the observed quantities, there are used a vehicle wheel speed $Vr_{rl}$^ of the left driving wheel 14L, a vehicle wheel speed $Vr_{rr}$^ of the right driving wheel 14R, the frontward and rearward acceleration ax^ of the vehicle 10, the yaw rate r^ of the vehicle 10, the vehicle body speed vx^, the road surface coefficient $\lambda_{r1}$^ between the left driving wheel 14L and the contact ground road surface, and the road surface coefficient $\lambda_{rr}$^ between the right driving wheel 14R and the contact ground road surface.

Among the observed quantities, the vehicle body speed vx^, the road surface coefficient $\lambda_{rl}$^, and the road surface coefficient $\lambda_{rr}$^ are pseudo-observed quantities. For example, in the case that the estimated values are forced to be arbitrary values, then such arbitrary values are input to the pseudo-observed values. In accordance with this feature, the estimated values are prevented from diverging.

The road surface coefficient $\lambda_{rl}$ is a correction factor for the reference frictional coefficient in the dynamic model of the left driving wheel 14L. The road surface coefficient $\lambda_{rr}$ is a correction factor for the reference frictional coefficient in the dynamic model of the right driving wheel 14R.

The term $Fx_{rl}$ in Equation (31) and Equation (32) is a driving force in the frontward and rearward direction of the left driving wheel 14L, and the term $Fx_{rr}$ is a driving force in a frontward and rearward direction of the right driving wheel 14R. The driving force $Fx_{rl}$ is obtained by Equation (33), and the driving force Fxrr is obtained by Equation (34).

The term $Fz_{rl}$ in Equation (33) is a wheel load of the left driving wheel 14L, and the term $Fz_{rr}$ in Equation (34) is a wheel load of the right driving wheel 14R. The wheel load $Fz_{rl}$ is determined using Equation (35), and the wheel load $Fz_{rr}$ is determined using Equation (36).

The term Iw in Equation (31) is a moment of inertia of the left driving wheel 14L and the right driving wheel 14R, and is a specification value. The term Iz in Equation (31) is a yaw moment of inertia, and is a specification value.

The term M in Equation (31), Equation (32), Equation (35), and Equation (36) is a weight of the vehicle 10, and is a specification value. The term h in Equation (35) and Equation (36) is a height of the center of gravity of the vehicle 10, and is a specification value. The term $Fz0_{rl}$ in Equation (33) and Equation (35) is a set wheel load of the left driving wheel 14L, and is a specification value. The term $Fz0_{rr}$ in Equation (34) and Equation (36) is a set wheel load of the right driving wheel 14R, and is a specification value.

The term Px2 in Equation (33) and Equation (34) is a reference maximum driving force of the left driving wheel 14L and the right driving wheel 14R, and is a specification value. The term κT0 in Equation (33) and Equation (34) is a reference tire stiffness of the left driving wheel 14L and the right driving wheel 14R, and is a specification value. The term ϕ0 in Equation (33) and Equation (34) is a reference ground contact length of the left driving wheel 14L and the right driving wheel 14R.

The term ay^ in Equation (35) and Equation (36) is a lateral acceleration of the vehicle 10, and is detected in the IMU 46. The term kμ in Equation (31) is a friction recovery coefficient, and is set to an arbitrary value. The term g in Equation (31) and Equation (32) is a gravitational acceleration. The term ϕP in Equation (31), Equation (32), Equation (35), and Equation (36) is an estimated value of the pitch angle of the vehicle 10. The term ϕR in Equation (35) and Equation (36) is an estimated value of a roll angle of the vehicle 10.

The estimation unit 38 processes a second state equation and an observation relational expression in accordance with a second extended Kalman filter, and thereby estimates the pitch angle ϕP and the roll angle ϕR of the vehicle 10. The second state equation includes, as state quantities, an estimated value ϕP of the pitch angle, and an estimated value ϕR of the roll angle. The observation relational expression shows a relationship between the observed value of the pitch angle ϕP^ and the observed value of the roll angle ϕR^, and the observed value of the frontward and rearward acceleration ax^, the observed value of the lateral acceleration ay^, and the observed value of the upper and lower acceleration az^.

The second state equation and the observation relational expression are set based on the dynamic model of the vehicle 10. The following Equation (37) is the second state equation, and the following Equation (38) is the observation relational expression.

$$\frac{d}{dx}\begin{bmatrix} \phi R \\ \phi P \\ pb \\ qb \\ rb \end{bmatrix} = \begin{bmatrix} (p^\wedge - pb) + (q^\wedge - qb) \cdot sin\,\phi R \cdot tan\,\phi P + (r^\wedge - rb) \cdot cos\,\phi R \cdot tan\,\phi P \\ (q^\wedge - qb)\,cos\,\phi R - (r^\wedge - rb)\,sin\,\phi R \\ 0 \\ 0 \\ 0 \end{bmatrix} \cdots (37)$$

$$\begin{bmatrix} \phi R^\wedge \\ \phi P^\wedge \end{bmatrix} = \begin{bmatrix} tan^{-1}\left(\frac{ay^\wedge}{az^\wedge}\right) \\ -\,tan^{-1}\left(\frac{ax^\wedge}{\sqrt{ay^{\wedge 2} + az^{\wedge 2}}}\right) \end{bmatrix} \cdots (38)$$

In the second state equation, there are used, as state quantities, the pitch angle ϕP of the vehicle 10 and the roll angle ϕR of the vehicle 10. Further, there are used, as control inputs, a roll rate p, a pitch rate q, and a yaw rate r. In the observation relational expression, there are used, as observed quantities, a pitch angle $\phi P\hat{}$ of the vehicle 10, a roll angle $\phi R\hat{}$ of the vehicle 10, the frontward and rearward acceleration ax^ of the vehicle 10, the lateral acceleration ay^ of the vehicle 10, and the upper and lower acceleration az^ of the vehicle 10.

The term pb in Equation (37) is a deviation amount of a midpoint of the roll rate p^ detected by the IMU 46, and is an estimated value. The term qb in Equation (37) is a deviation amount of a midpoint of the pitch rate q^ that is detected by the IMU 46. The term rb in Equation (37) is a deviation amount of a midpoint of the yaw rate r^ that is detected by the IMU 46.

The pitch angle $\phi P$ and the roll angle $\phi R$, which make up the angle of inclination of the vehicle 10, can be determined by integrating the angular velocity. However, since a deviation of the midpoint is included in the angular velocity detected by the IMU 46, the angle of inclination that is determined from the angular velocity also includes an integrated deviation of the midpoint.

Further, since the direction of the gravitational acceleration g with respect to the vehicle 10 changes due to the vehicle 10 being inclined, the angle of inclination can also be determined from the acceleration of the vehicle 10. However, since the dynamic acceleration of the vehicle 10 is included in the acceleration detected by the IMU 46, particularly at a time when the vehicle 10 is accelerating or decelerating, or at a time when turning, a large amount of error is included in the angle of inclination determined from the acceleration.

According to the present embodiment, the second state equation is set using the angular velocity, and the observation relational expression is set using the acceleration. By processing the second state equation and the observation relational expression in accordance with the second extended Kalman filter, the deviation of the midpoint of the angular velocity and the dynamic acceleration can be corrected in a complementary manner. More specifically, the second extended Kalman filter can be made to function as a complementary filter.

According to the present embodiment, the estimation is carried out using the extended Kalman filters, however, the estimation may be carried out using other parameter estimation methods. As such other parameter estimation methods, there may also be used at least squares estimation, a Markov estimation, a maximum likelihood estimation, a Bayesian estimation, or the like. Further, although the extended Kalman filters are a type of Bayesian estimation, other Kalman filters, for example, a sigma point Kalman filter or the like, may also be used.

[Driving Motor Control]

FIG. 7 is a flowchart of the driving motor control performed in the vehicle control device 26. The driving motor control is repeatedly executed at a predetermined cycle.

In step S1, the target value setting unit 32 sets the target vehicle speed V* and the target yaw rate r* based on an operated amount of the operating levers 18. Thereafter, the process transitions to step S2.

In step S2, the estimation unit 38 estimates the angle of inclination of the vehicle 10 based on the roll rate p^, the pitch rate q^, the yaw rate r^, the frontward and rearward acceleration ax^, the lateral acceleration ay^, and the upper and lower acceleration az^. Thereafter, the process transitions to step S3.

In step S3, the estimation unit 38 estimates the vehicle body speed vx, based on the rotational speed $\theta' w_{rl}\hat{}$ and the driving torque $TD_{rl}\hat{}$ of the left driving wheel 14L, the rotational speed $\theta' w_{rr}\hat{}$ and the driving torque $TD_{rr}\hat{}$ of the right driving wheel 14R, the frontward and rearward acceleration ax^, and the yaw rate r^. Thereafter, the process transitions to step S4.

In step S4, the slip ratio calculation unit 40 calculates a slip ratio $\kappa_{rl}$ of the left driving wheel 14L and a slip ratio $\kappa_{rr}$ of the right driving wheel 14R, using the vehicle body speed vx and the yaw rate r^. Thereafter, the process transitions to step S5.

In step S5, the first correction value calculation unit 42 calculates the first correction value rc1 using the slip ratio $\kappa_{rl}$ and the slip ratio $\kappa_{rr}$. Thereafter, the process transitions to step S6.

In step S6, the second correction value calculation unit 44 calculates the second correction value rc2 using the target yaw rate r* and the yaw rate r^. Thereafter, the process transitions to step S7.

In step S7, the target vehicle wheel speed calculation unit 34 calculates the target vehicle wheel speed $Vr_{rl}*$ of the left driving wheel 14L and the target vehicle wheel speed $Vr_{rr}*$ of the right driving wheel 14R, based on the target vehicle speed V*, the target yaw rate r*, the first correction value rc1, and the second correction value rc2. Thereafter, the process transitions to step S8.

In step S8, the rotational speed control unit 36 sets the command rotational speed $\theta' dw_{rl}*$ of the left driving motor 16L and the command rotational speed $\theta' dw_{rr}*$ of the right driving motor 16R, based on the target vehicle wheel speed $Vr_{rl}*$, the target vehicle wheel speed $Vr_{rr}*$, the rotational speed $\theta' w_{rl}\hat{}$ of the left driving motor 16L, and the rotational speed $\theta' w_{rr}\hat{}$ of the right driving motor 16R. The rotational speed control unit 36 outputs the command rotational speed $\theta' dw_{rl}*$ and the command rotational speed $\theta' dw_{rr}*$ to the motor driver 45. Thereafter, the driving motor control comes to an end.

[Second Embodiment]

FIG. 8 is a block diagram of the vehicle control device 26. The vehicle control device 26 according to the present embodiment, in addition to the configuration of the vehicle control device 26 of the first embodiment, includes a vehicle body speed limit range setting unit 48. The vehicle body speed limit range setting unit 48 sets a vehicle body speed upper limit value vx.H, and a vehicle body speed lower limit value vx.L.

FIG. 9 to FIG. 12 are image diagrams showing a relationship between a vehicle body speed vx, a vehicle wheel speed $Vr_{rl}$ of the left driving wheel 14L, and a vehicle wheel speed $Vr_{rr}$ of the right driving wheel 14R. A length of the bold arrow shown in FIG. 9 to FIG. 12 indicates a magnitude of the vehicle body speed vx, a magnitude of the vehicle wheel speed $Vr_{rl}$, and a magnitude of the vehicle wheel speed $Vr_{rr}$. FIG. 9 shows a relationship at a time of acceleration, FIG. 10 shows a relationship at a time of deceleration, FIG. 11 shows a relationship at a time of turning left, and FIG. 12 shows a relationship at a time of turning right. Moreover, at the time of acceleration and at the time of deceleration, the vehicle 10 is traveling straight or is gradually turning.

At the time of acceleration, since a driving force is generated in a direction that causes the vehicle 10 to move forward in the left driving wheel 14L and the right driving wheel 14R, as shown in FIG. 9, the vehicle body speed vx becomes smaller than the vehicle wheel speed $Vr_{rl}$, and becomes smaller than the vehicle wheel speed $Vr_{rr}$. At the time of deceleration, since the vehicle 10 generates a braking force in the left driving wheel 14L and the right driving wheel 14R, as shown in FIG. 10, the vehicle body speed vx becomes greater than the vehicle wheel speed $Vr_{rl}$, and becomes greater than the vehicle wheel speed $Vr_{rr}$.

At a time of turning left, since a braking force is generated in the left driving wheel 14L, and a driving force is generated in the right driving wheel 14R, as shown in FIG. 11, the vehicle body speed vx becomes greater than the vehicle wheel speed $Vr_{rl}$, and becomes smaller than the vehicle wheel speed $Vr_{rr}$. When the vehicle turns right, a driving force is generated at the left driving wheel 14L and a braking force is generated at the right driving wheel 14R, so that the vehicle body speed vx is lower than the vehicle wheel speed $Vr_{rl}$ and higher than the vehicle wheel speed $Vr_{rr}$ as shown in FIG. 12.

However, in the case that the estimation accuracy of the vehicle body speed vx is low, there are cases in which the estimated vehicle body speed vx may not satisfy the relationship shown in FIG. 9 to FIG. 12. According to the present embodiment, in the case that the accuracy of the vehicle body speed vx estimated by the method described according to the first embodiment is low, the vehicle body speed vx is estimated by another method.

[Vehicle Body Speed Estimation Process]

FIG. 13 is a flowchart of a vehicle body speed estimation process carried out in the vehicle control device 26. The vehicle body speed estimation process is a process performed in step S3 of FIG. 7 of the first embodiment.

In step S11, the estimation unit 38 estimates the vehicle body speed vx. Thereafter, the process transitions to step S12. The estimation of the vehicle body speed vx in step S11 is carried out by the method that was described in the first embodiment.

In step S12, the estimation unit 38 determines the vehicle behavior. In the case it is determined that the vehicle 10 is accelerating, the process transitions to step S13.

In step S13, the vehicle body speed limit range setting unit 48 sets the vehicle body speed upper limit value vx.H based on the smaller one from among the vehicle wheel speed $Vr_{rl}$ of the left driving wheel 14L and the vehicle wheel speed $Vr_{rr}$ of the right driving wheel 14R. Thereafter, the process transitions to step S14.

In the case that the vehicle wheel speed $Vr_{rl}$ is smaller, the vehicle body speed upper limit value vx.H is set based on the following Equation (39). In the case that the vehicle wheel speed $Vr_{rr}$ is smaller, the vehicle body speed upper limit value vx.H is set based on the following Equation (40).

$$vx.H = Vr_{rl} + \frac{dr}{2}r \cdots (39)$$

$$vx.H = Vr_{rr} - \frac{dr}{2}r \cdots (40)$$

In step S14, the vehicle body speed limit range setting unit 48 sets to the vehicle body speed lower limit value vx.L a value obtained by subtracting a first predetermined value from the vehicle body speed upper limit value vx.H. Thereafter, the process transitions to step S15.

In step S15, the estimation unit 38 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control in FIG. 7. In the case that the estimated vehicle body speed vx is less than the vehicle body speed lower limit value vx.L, or alternatively, is greater than the vehicle body speed upper limit value vx.H, the process transitions to step S16.

In step S16, the estimation unit 38 sets the estimated value of the vehicle body speed vx to the vehicle body speed upper limit value vx.H. Thereafter, the vehicle body speed estimation process is terminated, and the process returns to the driving motor control in FIG. 7.

In step S12, in the case that the estimation unit 38 determines that the vehicle 10 is decelerating, the process transitions to step S17.

In step S17, the vehicle body speed limit range setting unit 48 sets the vehicle body speed lower limit value vx.L based on the greater one from among the vehicle wheel speed $Vr_{rl}$ of the left driving wheel 14L and the vehicle wheel speed $Vr_{rr}$ of the right driving wheel 14R. Thereafter, the process transitions to step S18.

In the case that the vehicle wheel speed $Vr_{rl}$ is greater, the vehicle body speed lower limit value vx.L is set based on the following Equation (41). In the case that the vehicle wheel speed $Vr_{rr}$ is greater, the vehicle body speed lower limit value vx.L is set based on the following Equation (42).

$$vx.L = Vr_{rl} + \frac{dr}{2}r \cdots (41)$$

$$vx.L = Vr_{rr} - \frac{dr}{2}r \cdots (42)$$

In step S18, the vehicle body speed limit range setting unit 48 sets to the vehicle body speed upper limit value vx.H a value obtained by adding a second predetermined value to the vehicle body speed lower limit value vx.L. Thereafter, the process transitions to step S19. The magnitude of the second predetermined value may be the same as, or may be different from the magnitude of the first predetermined value.

In step S19, the estimation unit 38 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control in FIG. 7. In the case that the estimated vehicle body speed vx is less than the vehicle body speed lower limit value vx.L, or alternatively, is greater than the vehicle body speed upper limit value vx.H, the process transitions to step S20.

In step S20, the estimation unit 38 sets the estimated value of the vehicle body speed vx to the vehicle body speed lower limit value vx.L. Thereafter, the vehicle body speed estimation process is terminated, and the process returns to the driving motor control of FIG. 7.

In step S12, in the case that the estimation unit 38 determines that the vehicle 10 is turning left, the process transitions to step S21.

In step S21, the vehicle body speed limit range setting unit 48 sets the vehicle body speed upper limit value vx.H based on the vehicle wheel speed $Vr_{rr}$ of the right driving wheel 14R. Thereafter, the process transitions to step S22. The vehicle body speed upper limit value vx.H is set based on the aforementioned Equation (40).

In step S22, the vehicle body speed limit range setting unit 48 sets the vehicle body speed lower limit value vx.L based on the vehicle wheel speed $Vr_{rl}$ of the left driving wheel 14L. Thereafter, the process transitions to step S23. The vehicle body speed lower limit value vx.L is set based on the aforementioned Equation (41).

In step S23, the estimation unit 38 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control in FIG. 7. In the case that the estimated vehicle body speed vx is less than the vehicle body speed lower limit value vx.L, or alternatively, is greater than the vehicle body speed upper limit value vx.H, the process transitions to step S24.

In step S24, the estimation unit 38 sets the estimated value of the vehicle body speed vx based on the vehicle body speed upper limit value vx.H and the vehicle body speed lower limit value vx.L. Thereafter, the vehicle body speed estimation process is terminated, and the process returns to the driving motor control of FIG. 7. The estimated value of the vehicle body speed vx is set based on the following Equation (43).

$$vx = \begin{cases} vx.L(vx < vx.L) \\ vx.H(vx > vx.H) \end{cases} \cdots (43)$$

In step S12, in the case that the estimation unit 38 determines that the vehicle 10 is turning right, the process transitions to step S25.

In step S25, the vehicle body speed limit range setting unit 48 sets the vehicle body speed upper limit value vx.H based on the vehicle wheel speed $Vr_{rl}$ of the left driving wheel 14L. Thereafter, the process transitions to step S26. The vehicle body speed upper limit value vx.H is set based on the aforementioned Equation (39).

In step S26, the vehicle body speed limit range setting unit 48 sets the vehicle body speed lower limit value vx.L based on the vehicle wheel speed $Vr_{rr}$ of the right driving wheel 14R. Thereafter, the process transitions to step S27. The vehicle body speed lower limit value vx.L is set based on the aforementioned Equation (42).

In step S27, the estimation unit 38 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control in FIG. 7. In the case that the estimated vehicle body speed vx is less than the vehicle body speed lower limit value vx.L, or alternatively, is greater than the vehicle body speed upper limit value vx.H, the process transitions to step S28.

In step S28, the estimation unit 38 sets the estimated value of the vehicle body speed vx based on the vehicle body speed upper limit value vx.H and the vehicle body speed lower limit value vx.L. Thereafter, the vehicle body speed estimation process is terminated, and the process returns to the driving motor control of FIG. 7. The estimated value of the vehicle body speed vx is set based on the aforementioned Equation (43).

In the above-described vehicle body speed estimation control, in the case that the vehicle body speed vx estimated by the method of the first embodiment is greater than the vehicle body speed upper limit value vx.H, or alternatively, is less than the vehicle body speed lower limit value vx.L, the estimation unit 38 estimates the vehicle body speed vx based on at least one of the vehicle body speed upper limit value vx.H, or the vehicle body speed lower limit value vx.L. In contrast thereto, in the case that the observed value used in the method of the first embodiment cannot be obtained, the estimation unit 38 may estimate the vehicle body speed vx based on at least one of the vehicle body speed upper limit value vx.H, or the vehicle body speed lower limit value vx.L. The aforementioned observed value is a value that is one or a plurality of values from among the driving torque $TD_{rl}$^ of the left driving wheel 14L, the driving torque $TD_{rr}$^ of the right driving wheel 14R, the frontward and rearward acceleration ax^ of the vehicle 10, and the yaw rate r^ of the vehicle 10.

In relation to the disclosure provided above, the following Supplementary Notes are further disclosed.

(Supplementary Note 1)

In the vehicle control device (26) configured to control the vehicle (10) including the left driving motor (16L) configured to drive the left driving wheel (14L), and the right driving motor (16R) configured to drive the right driving wheel (14R), the vehicle being capable of turning based on the difference between the vehicle wheel speed of the left driving wheel and the vehicle wheel speed of the right driving wheel, the vehicle control device includes the target value setting unit (32) configured to set the target vehicle speed and the target yaw rate, the first correction value calculation unit (42) configured to calculate the first correction value corresponding to the yaw rate component generated due to the slip of the left driving wheel and the slip of the right driving wheel, the second correction value calculation unit (44) configured to calculate the second correction value corresponding to the yaw rate component generated due to the contact ground surface shape of the left driving wheel and the contact ground surface shape of the right driving wheel, the target vehicle wheel speed calculation unit (34) configured to calculate the target vehicle wheel speed of the left driving wheel and the target vehicle wheel speed of the right driving wheel by using the target vehicle speed, the target yaw rate, the first correction value, and the second correction value, and the rotational speed control unit (36) configured to control the rotational speed of the left driving motor based on the target vehicle wheel speed of the left driving wheel, and control the rotational speed of the right driving motor based on the target vehicle wheel speed of the right driving wheel. In accordance with such a configuration, the yaw rate component generated due to the slip of the left driving wheel and the slip of the right driving wheel and the yaw rate component generated due to the contact ground surface shape of the left driving wheel and the contact ground surface shape of the right driving wheel can be corrected, and thus the vehicle behavior can be stabilized.

(Supplementary Note 2)

In the vehicle control device according to Supplementary Note 1, in the case where the vehicle travels straight, the target vehicle wheel speed calculation unit may calculate the target vehicle wheel speed of the left driving wheel and the target vehicle wheel speed of the right driving wheel by using the target vehicle speed, the target yaw rate, the first correction value, and the second correction value. In accordance with such a configuration, the vehicle behavior during traveling straight can be stabilized.

(Supplementary Note 3)

In the vehicle control device according to Supplementary Note 1 or 2, the vehicle control device may further include the slip ratio calculation unit (40) configured to calculate the slip ratio of the left driving wheel by using the vehicle body speed and the vehicle wheel speed of the left driving wheel, and calculate the slip ratio of the right driving wheel by using the vehicle body speed and the vehicle wheel speed of the right driving wheel, wherein the first correction value calculation unit may calculate the first correction value by using the vehicle wheel speed of the left driving wheel, the vehicle wheel speed of the right driving wheel, the slip ratio of the left driving wheel that has been calculated, and the slip ratio of the right driving wheel that has been calculated. In accordance with such a configuration, the yaw rate component generated due to the slip of the left driving wheel and the slip of the right driving wheel can be accurately obtained, and thus the vehicle behavior can be stabilized.

(Supplementary Note 4)

In the vehicle control device according to any one of the Supplementary Notes 1 to 3, the second correction value calculation unit may calculate the second correction value by using the deviation of the yaw rate from the target yaw rate. In accordance with such a configuration, the yaw rate component generated due to the contact ground surface shape of the left driving wheel and the contact ground surface shape of the right driving wheel can be accurately obtained, and thus the vehicle behavior can be stabilized.

(Supplementary Note 5)

The vehicle control device according to Supplementary Note 3 may further include the estimation unit (38) configured to estimate the vehicle body speed based on the rotational speed and the driving torque of the left driving wheel, the rotational speed and the driving torque of the right driving wheel, the frontward and rearward acceleration, and the yaw rate. In accordance with such a configuration, the vehicle body speed can be estimated with high accuracy.

(Supplementary Note 6)

In the vehicle control device according to Supplementary Note 5, the first state equation that includes as the state quantity the estimated value of the vehicle body speed, and the observation equation that includes as the observed quantities the observed value of the rotational speed of the left driving wheel, the observed value of the rotational speed of the right driving wheel, the observed value of the frontward and rearward acceleration of the vehicle, and the observed value of the yaw rate of the vehicle, may be set based on the dynamic model of the vehicle, the dynamic model of the left driving wheel, and the dynamic model of the right driving wheel, and the estimation unit may estimate the vehicle body speed by processing the first state equation and the observation equation by the first parameter estimation method. In accordance with such a configuration, the vehicle body speed of the vehicle can be estimated with high accuracy.

(Supplementary Note 7)

In the vehicle control device according to Supplementary Note 6, the first state equation may include the estimated value of the angle of inclination of the vehicle as the control input, the second state equation that includes as the state quantity the estimated value of the angle of inclination, and the observation relational expression indicating the relationship between the observed value of the angle of inclination and the observed value of the acceleration of the vehicle, may be set based on the dynamic model of the vehicle, and the estimation unit may process the second state equation and the observation relational expression by the second parameter estimation method, and may thereby estimate the angle of inclination. In accordance with such a configuration, the angle of inclination of the vehicle can be estimated with high accuracy.

(Supplementary Note 8)

In the vehicle control device according to any one of the supplementary notes 5 to 7, the vehicle control device may further include the vehicle body speed limit range setting unit (48) configured to set the vehicle body speed upper limit value that is the upper limit value of the vehicle body speed, and the vehicle body speed lower limit value that is the lower limit value of the vehicle body speed, based on the vehicle wheel speed of the left driving wheel, the vehicle wheel speed of the right driving wheel, and the yaw rate, wherein, in the case where the vehicle body speed that has been estimated is greater than the vehicle body speed upper limit value, or in the case where the vehicle body speed that has been estimated is smaller than the vehicle body speed lower limit value, the estimation unit may estimate the vehicle body speed based on at least one of the vehicle body speed upper limit value or the vehicle body speed lower limit value. In accordance with such a configuration, it is possible to suppress a decrease in the estimation accuracy of the vehicle body speed of the vehicle.

(Supplementary Note 9)

In the vehicle control device according to Supplementary Note 8, in the case where one or the plurality of values from among the driving torque of the left driving wheel, the driving torque of the right driving wheel, the frontward and rearward acceleration, and the yaw rate cannot be obtained, the estimation unit may estimate the vehicle body speed based on at least one of the vehicle body speed upper limit value or the vehicle body speed lower limit value. In accordance with such a configuration, it is possible to suppress a decrease in the estimation accuracy of the vehicle body speed of the vehicle.

(Supplementary Note 10)

The vehicle turns due to the difference between the vehicle wheel speed of the left driving wheel and the vehicle wheel speed of the right driving wheel, wherein the vehicle includes the vehicle control device according to any one of Supplementary Notes 1 to 9. In accordance with such a configuration, the yaw rate component generated due to the slip of the left driving wheel and the slip of the right driving wheel and the yaw rate component generated due to the contact ground surface shape of the left driving wheel and the contact ground surface shape of the right driving wheel can be corrected, and thus the vehicle behavior can be stabilized.

(Supplementary Note 11)

In the vehicle control method for controlling the vehicle including the left driving motor configured to drive the left driving wheel, and the right driving motor configured to drive the right driving wheel, the vehicle being capable of turning based on the difference between the vehicle wheel speed of the left driving wheel and the vehicle wheel speed of the right driving wheel, the method includes the target value setting step of setting the target vehicle speed and the target yaw rate, the first correction value calculation step of calculating the first correction value corresponding to the yaw rate component generated due to the slip of the left driving wheel and the slip of the right driving wheel, the second correction value calculation step of calculating the second correction value corresponding to the yaw rate component generated due to the contact ground surface shape of the left driving wheel and the contact ground surface shape of the right driving wheel, the target vehicle wheel speed calculation step of calculating the target vehicle wheel speed of the left driving wheel and the target vehicle wheel speed of the right driving wheel by using the target vehicle speed, the target yaw rate, the first correction value, and the second correction value, and the rotational speed control step of controlling the rotational speed of the left driving motor based on the target vehicle wheel speed of the left driving wheel, and of controlling the rotational speed of the right driving motor based on the target vehicle wheel speed of the right driving wheel. In accordance with such a configuration, the yaw rate component generated due to the slip of the left driving wheel and the slip of the right driving wheel and the yaw rate component generated due to the contact ground surface shape of the left driving wheel and the contact ground surface shape of the right driving wheel can be corrected, and thus the vehicle behavior can be stabilized.

It should be noted that the present invention is not limited to the disclosure described above, and various additional or alternative configurations could be adopted therein without departing from the essence and gist of the present invention.

## Claims

**1.** A vehicle control device (26) configured to control a vehicle (10) including a left driving motor (16L) configured to drive a left driving wheel (14L), and a right driving motor (16R) configured to drive a right driving wheel (14R), the vehicle being capable of turning based on a difference between a vehicle wheel speed of the left driving wheel and a vehicle wheel speed of the right driving wheel, the vehicle control device comprising:

a target value setting unit (32) configured to set a target vehicle speed and a target yaw rate;
a first correction value calculation unit (42) configured to calculate a first correction value corresponding to a yaw rate component generated due to a slip of the left driving wheel and a slip of the right driving wheel;
a second correction value calculation unit (44) configured to calculate a second correction value corresponding to a yaw rate component generated due to a contact ground surface shape of the left driving wheel and a contact ground surface shape of the right driving wheel;
a target vehicle wheel speed calculation unit (34) configured to calculate a target vehicle wheel speed of the left driving wheel and a target vehicle wheel speed of the right driving wheel by using the target vehicle speed, the target yaw rate, the first correction value, and the second correction value; and
a rotational speed control unit (36) configured to control a rotational speed of the left driving motor based on the target vehicle wheel speed of the left driving wheel, and control a rotational speed of the right driving motor based on the target vehicle wheel speed of the right driving wheel.

**2.** The vehicle control device according to claim 1, wherein in a case where the vehicle travels straight, the target vehicle wheel speed calculation unit calculates the target vehicle wheel speed of the left driving wheel and the target vehicle wheel speed of the right driving wheel by using the target vehicle speed, the target yaw rate, the first correction value, and the second correction value.

**3.** The vehicle control device according to claim 1, further comprising a slip ratio calculation unit (40) configured to calculate a slip ratio of the left driving wheel by using a vehicle body speed and the vehicle wheel speed of the left driving wheel, and calculate a slip ratio of the right driving wheel by using the vehicle body speed and the vehicle wheel speed of the right driving wheel,
wherein the first correction value calculation unit calculates the first correction value by using the vehicle wheel speed of the left driving wheel, the vehicle wheel speed of the right driving wheel, the slip ratio of the left driving wheel that has been calculated, and the slip ratio of the right driving wheel that has been calculated.

**4.** The vehicle control device according to claim 1, wherein the second correction value calculation unit calculates the second correction value by using a deviation of a yaw rate from the target yaw rate.

**5.** The vehicle control device according to claim 3, further comprising an estimation unit (38) configured to estimate the vehicle body speed based on a rotational speed and a driving torque of the left driving wheel, a rotational speed and a driving torque of the right driving wheel, a frontward and rearward acceleration, and a yaw rate.

**6.** The vehicle control device according to claim 5, wherein a first state equation that includes as a state quantity an estimated value of the vehicle body speed, and an observation equation that includes as observed quantities an observed value of the rotational speed of the left driving wheel, an observed value of the rotational speed of the right driving wheel, an observed value of the frontward and rearward acceleration of the vehicle, and an observed value of the yaw rate of the vehicle, are set based on a dynamic model of the vehicle, a dynamic model of the left driving wheel, and a dynamic model of the right driving wheel, and
the estimation unit estimates the vehicle body speed by processing the first state equation and the observation equation by a first parameter estimation method.

**7.** The vehicle control device according to claim 6, wherein the first state equation includes an estimated value of an angle of inclination of the vehicle as a control input,

a second state equation that includes as a state quantity the estimated value of the angle of inclination, and an observation relational expression indicating a relationship between an observed value of the angle of inclination and an observed value of an acceleration of the vehicle, are set based on the dynamic model of the vehicle, and
the estimation unit processes the second state equation and the observation relational expression by a second parameter estimation method, and thereby estimates the angle of inclination.

**8.** The vehicle control device according to claim 5, further comprising a vehicle body speed limit range setting unit (48) configured to set a vehicle body speed upper limit value that is an upper limit value of the vehicle body speed, and a vehicle body speed lower limit value that is a lower limit value of the vehicle body speed, based on the vehicle wheel speed of the left driving wheel, the vehicle wheel speed of the right driving wheel, and the yaw rate,
wherein, in a case where the vehicle body speed that has been estimated is greater than the vehicle body speed upper limit value, or in a case where the vehicle body speed that has been estimated is smaller than the vehicle body speed lower limit value, the estimation unit estimates the vehicle body speed based on at least one of the vehicle body speed upper limit value or the vehicle body speed lower limit value.

**9.** The vehicle control device according to claim 8, wherein in a case where one or a plurality of values from among the driving torque of the left driving wheel, the driving torque of the right driving wheel, the frontward and rearward acceleration, and the yaw rate cannot be obtained, the estimation unit estimates the vehicle body speed based on at least one of the vehicle body speed upper limit value or the vehicle body speed lower limit value.

**10.** A vehicle comprising the vehicle control device according to any one of claims 1 to 9, and being capable of turning based on a difference between the vehicle wheel speed of the left driving wheel and the vehicle wheel speed of the right driving wheel.

**11.** A vehicle control method for controlling a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the method comprising:

a target value setting step of setting a target vehicle speed and a target yaw rate;
a first correction value calculation step of calculating a first correction value corresponding to a yaw rate component generated due to a slip of the left driving wheel and a slip of the right driving wheel;
a second correction value calculation step of calculating a second correction value corresponding to a yaw rate component generated due to a contact ground surface shape of the left driving wheel and a contact ground surface shape of the right driving wheel;
a target vehicle wheel speed calculation step of calculating a target vehicle wheel speed of the left driving wheel and a target vehicle wheel speed of the right driving wheel by using the target vehicle speed, the target yaw rate, the first correction value, and the second correction value; and
a rotational speed control step of controlling a rotational speed of the left driving motor based on the target vehicle wheel speed of the left driving wheel, and of controlling a rotational speed of the right driving motor based on the target vehicle wheel speed of the right driving wheel.

FIG. 1

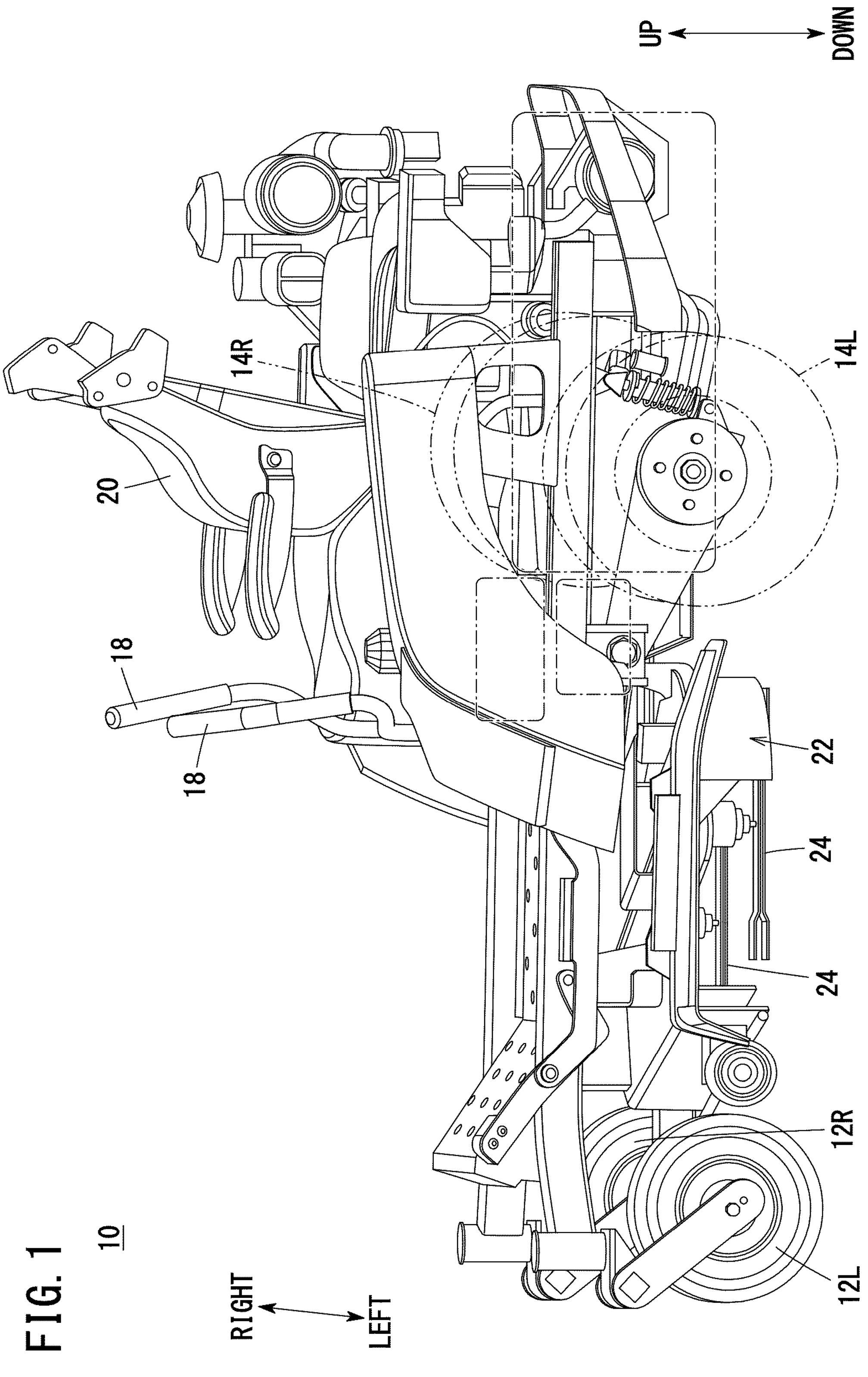
10
UP
DOWN
14R
14L
20
18
18
22
24
24
12R
12L
FRONT
REAR
RIGHT
LEFT

FIG. 2

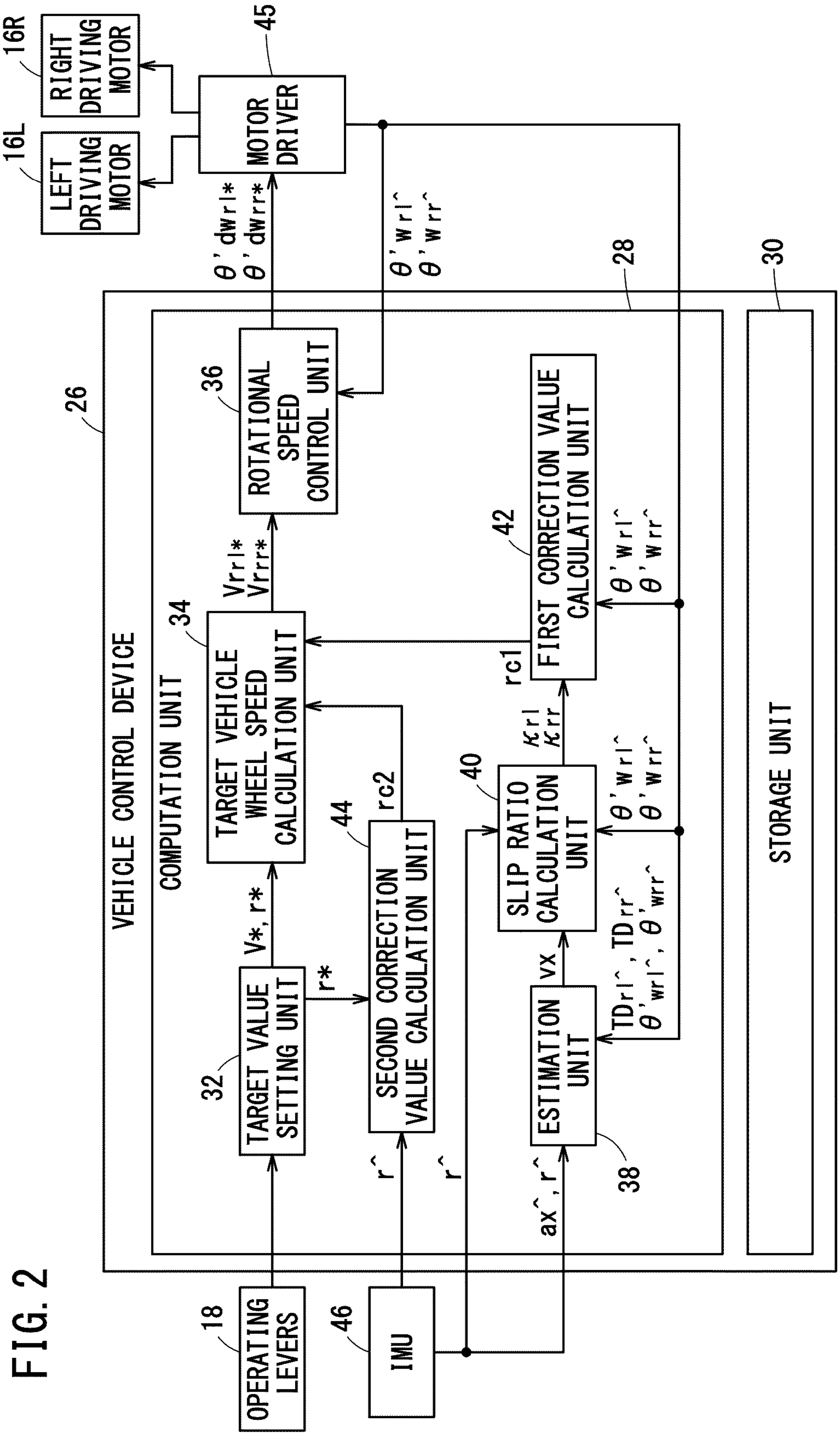
16L
LEFT DRIVING MOTOR
16R
RIGHT DRIVING MOTOR
45
MOTOR DRIVER
θ'dwrl*
θ'dwrr*
θ'wrl^
θ'wrr^
26
VEHICLE CONTROL DEVICE
28
COMPUTATION UNIT
30
STORAGE UNIT
36
ROTATIONAL SPEED CONTROL UNIT
Vrrl*
Vrrr*
34
TARGET VEHICLE WHEEL SPEED CALCULATION UNIT
42
FIRST CORRECTION VALUE CALCULATION UNIT
rc1
θ'wrl^
θ'wrr^
V*, r*
r*
32
TARGET VALUE SETTING UNIT
44
SECOND CORRECTION VALUE CALCULATION UNIT
rc2
40
SLIP RATIO CALCULATION UNIT
κrl
κrr
vx
38
ESTIMATION UNIT
TDrl^, TDrr^
θ'wrl^, θ'wrr^
r^
ax^, r^
18
OPERATING LEVERS
46
IMU

FIG. 3

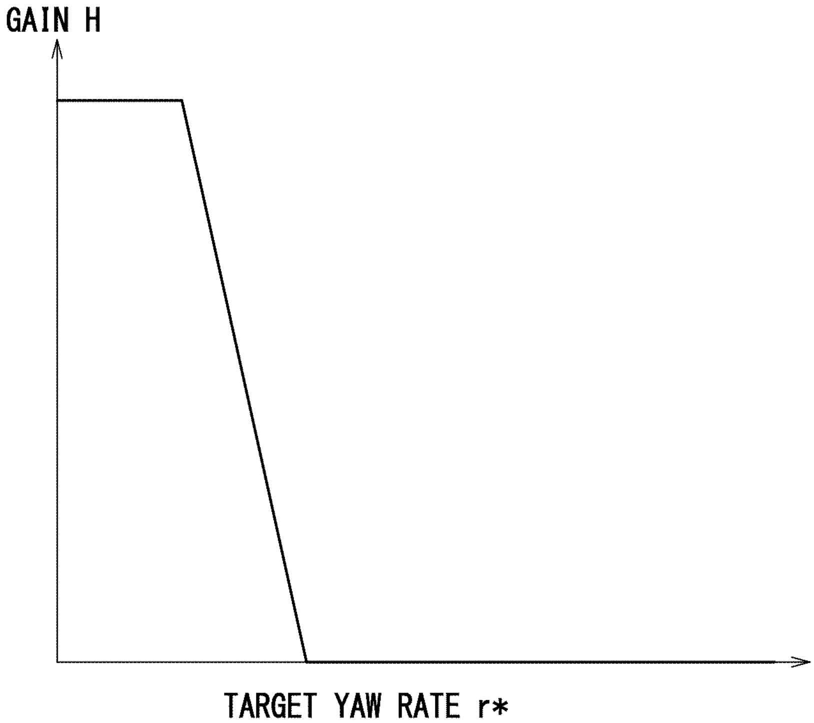

FIG. 4

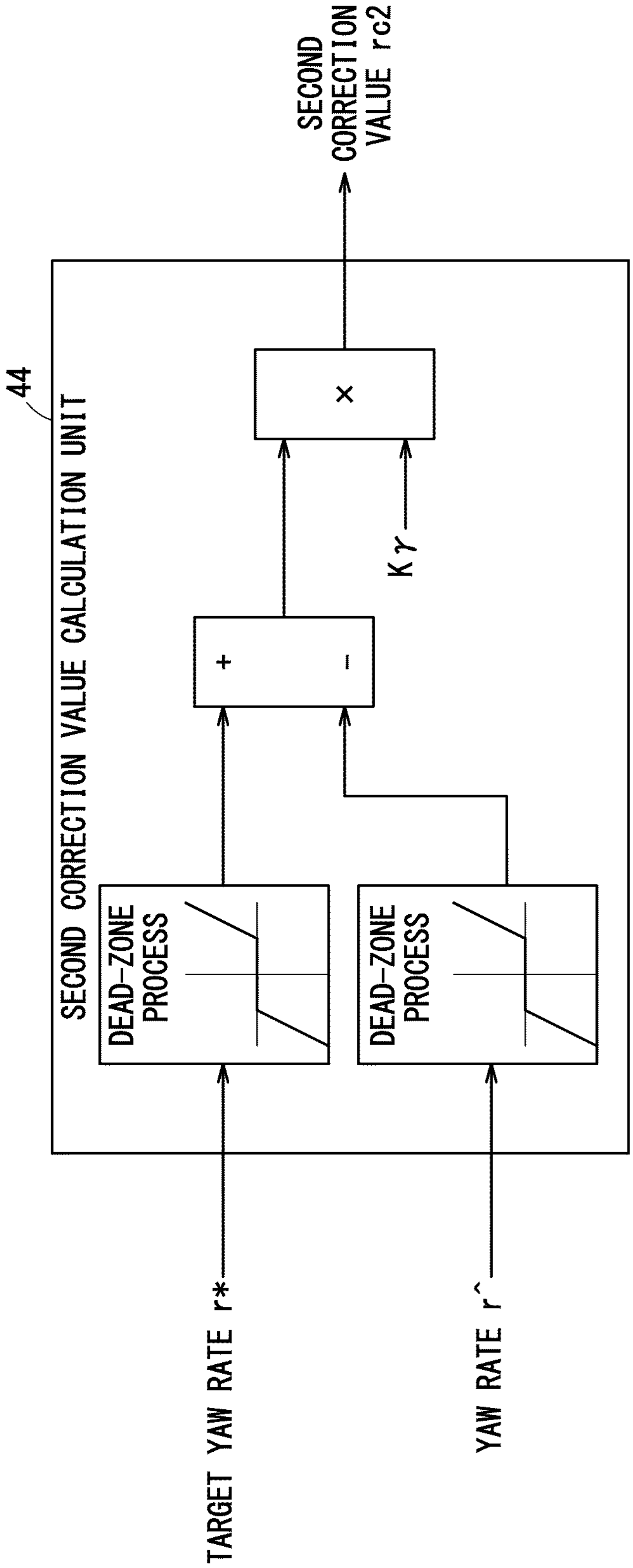
44
SECOND CORRECTION VALUE CALCULATION UNIT
TARGET YAW RATE r*
YAW RATE r^
DEAD-ZONE PROCESS
DEAD-ZONE PROCESS
+
-
Kγ
×
SECOND CORRECTION VALUE rc2

FIG. 5

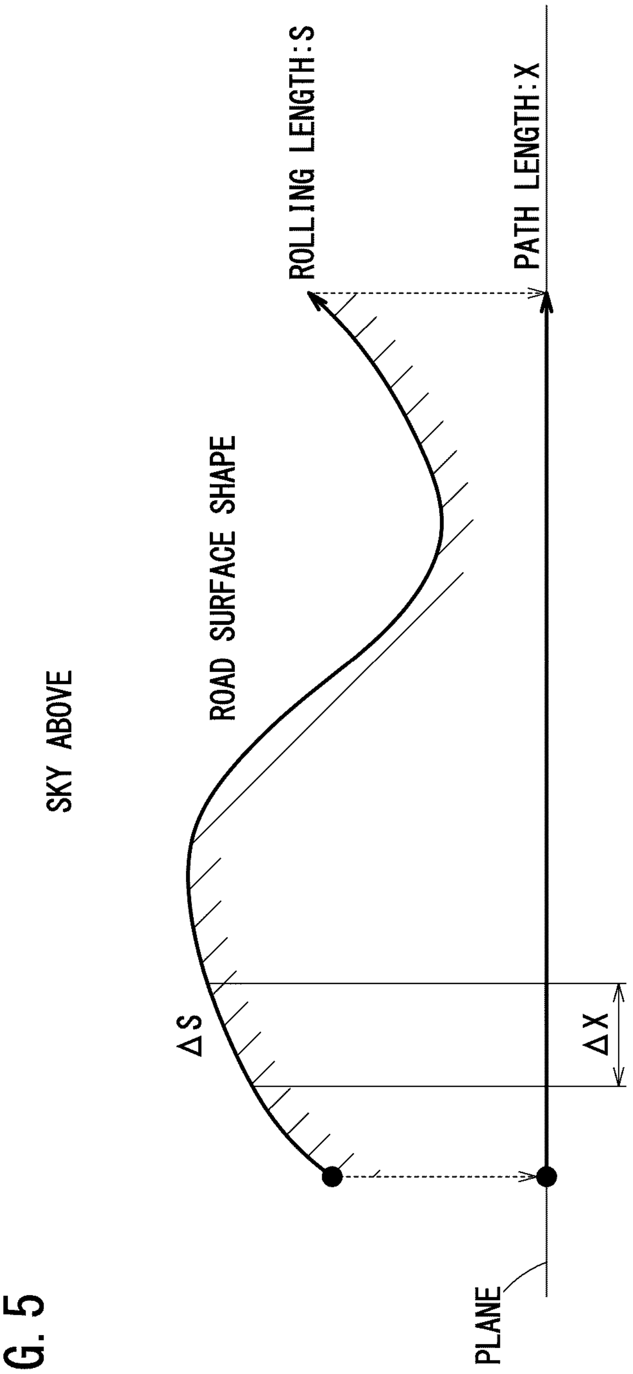
SKY ABOVE
ROAD SURFACE SHAPE
ROLLING LENGTH:S
PATH LENGTH:X
ΔS
ΔX
PLANE

FIG. 6

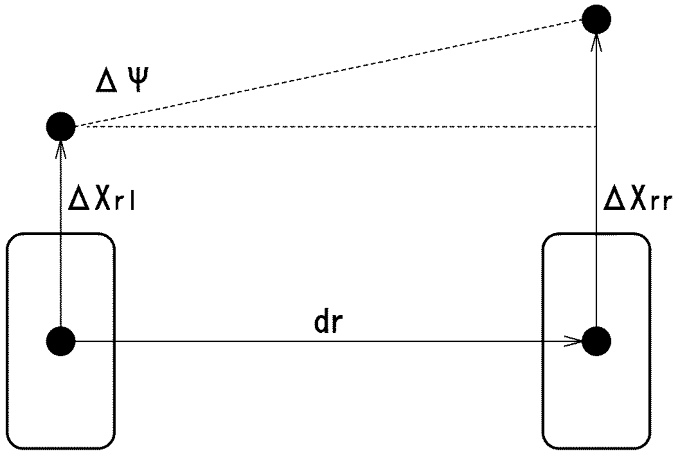

FIG. 7

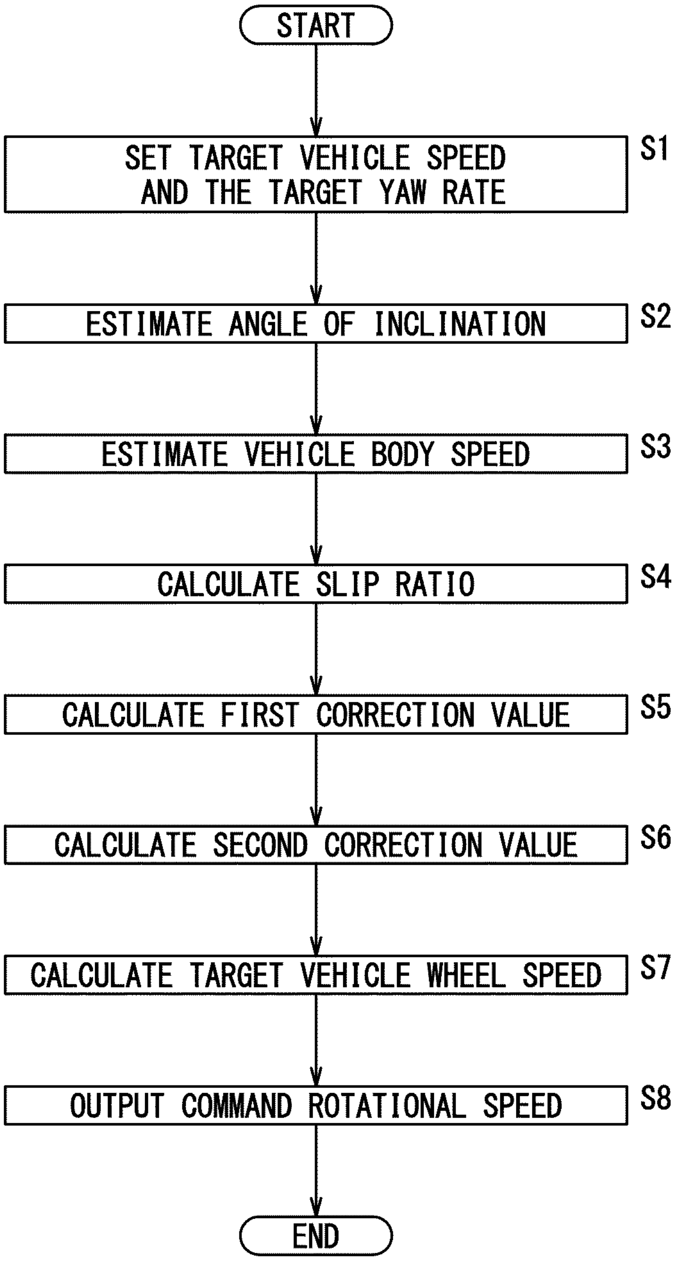
START
SET TARGET VEHICLE SPEED AND THE TARGET YAW RATE
S1
ESTIMATE ANGLE OF INCLINATION
S2
ESTIMATE VEHICLE BODY SPEED
S3
CALCULATE SLIP RATIO
S4
CALCULATE FIRST CORRECTION VALUE
S5
CALCULATE SECOND CORRECTION VALUE
S6
CALCULATE TARGET VEHICLE WHEEL SPEED
S7
OUTPUT COMMAND ROTATIONAL SPEED
S8
END

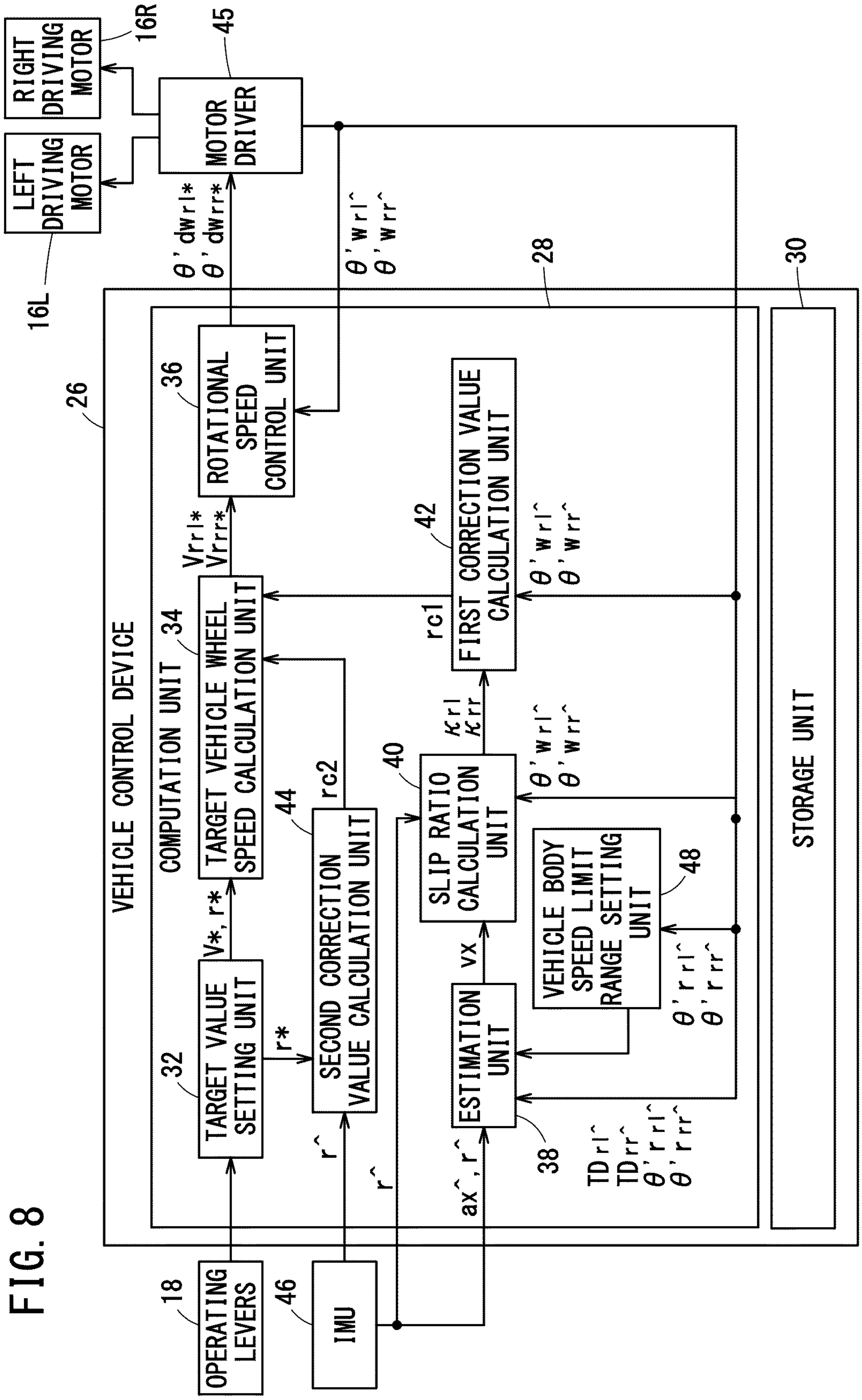
RIGHT DRIVING MOTOR
16R
LEFT DRIVING MOTOR
16L
MOTOR DRIVER
45
θ'dwrl*
θ'dwrr*
θ'wrl^
θ'wrr^
VEHICLE CONTROL DEVICE
26
COMPUTATION UNIT
28
30
STORAGE UNIT
ROTATIONAL SPEED CONTROL UNIT
36
Vrrl*
Vrrr*
TARGET VEHICLE WHEEL SPEED CALCULATION UNIT
34
FIRST CORRECTION VALUE CALCULATION UNIT
42
rc1
κrl
κrr
SLIP RATIO CALCULATION UNIT
40
VEHICLE BODY SPEED LIMIT RANGE SETTING UNIT
48
θ'rrl^
θ'rrr^
vx
ESTIMATION UNIT
38
TDrl^
TDrr^
θ'rrl^
θ'rrr^
V*, r*
TARGET VALUE SETTING UNIT
32
r*
SECOND CORRECTION VALUE CALCULATION UNIT
44
rc2
r^
ax^, r^
OPERATING LEVERS
18
IMU
46

FIG. 8

FIG. 9

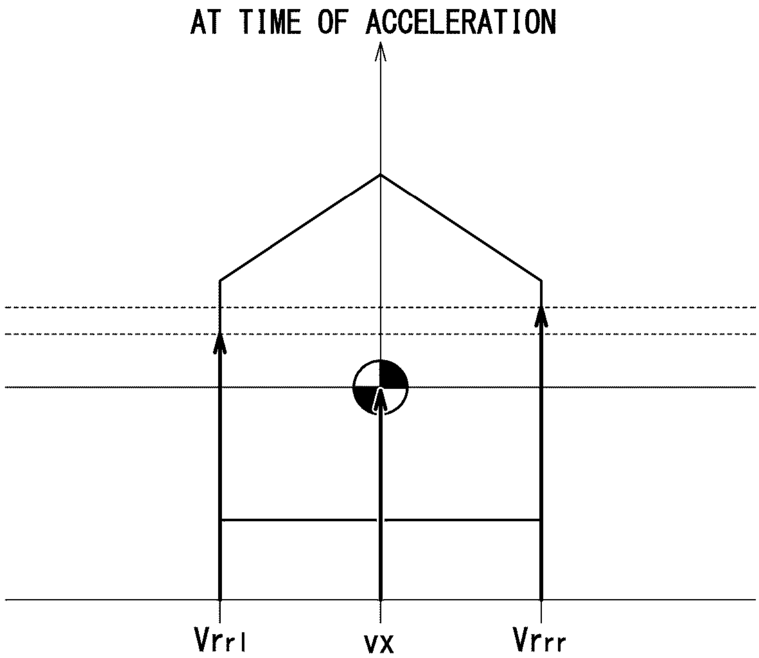

FIG. 10

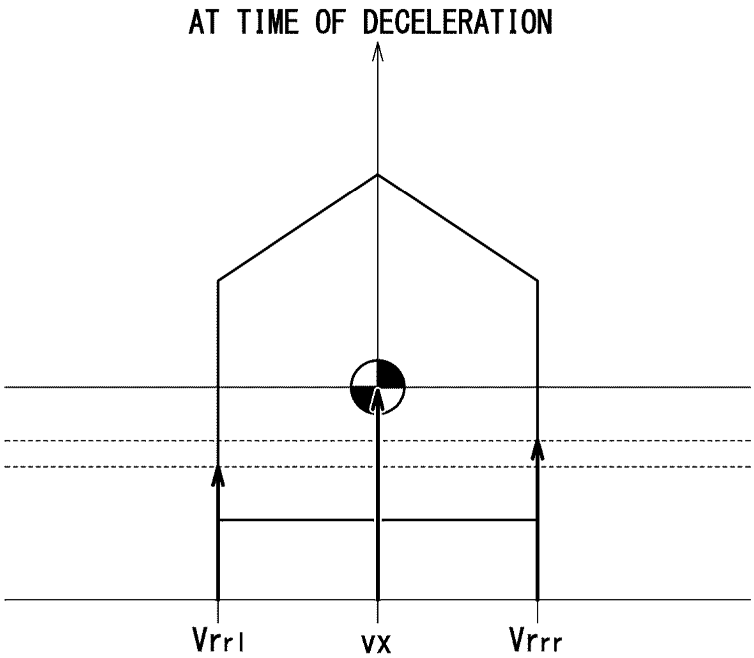

FIG. 11

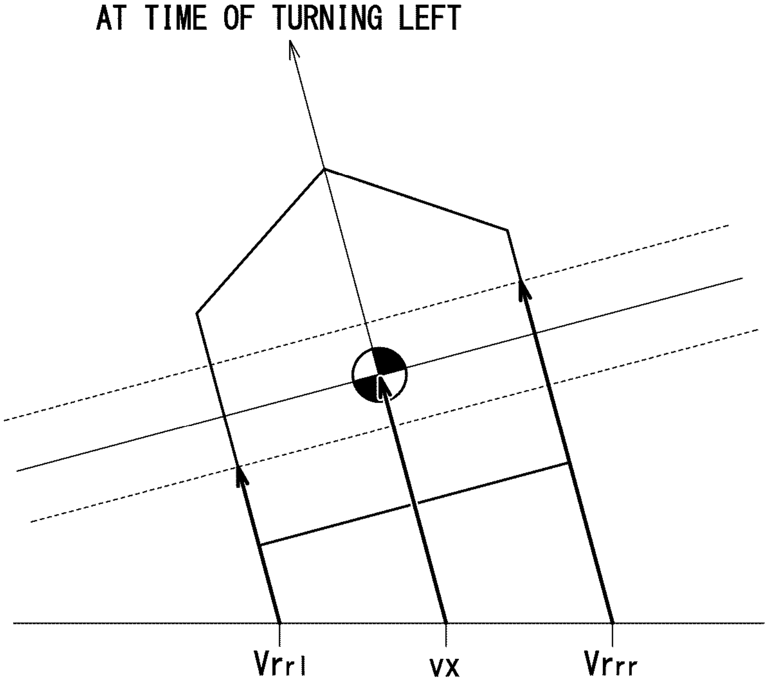

FIG. 12

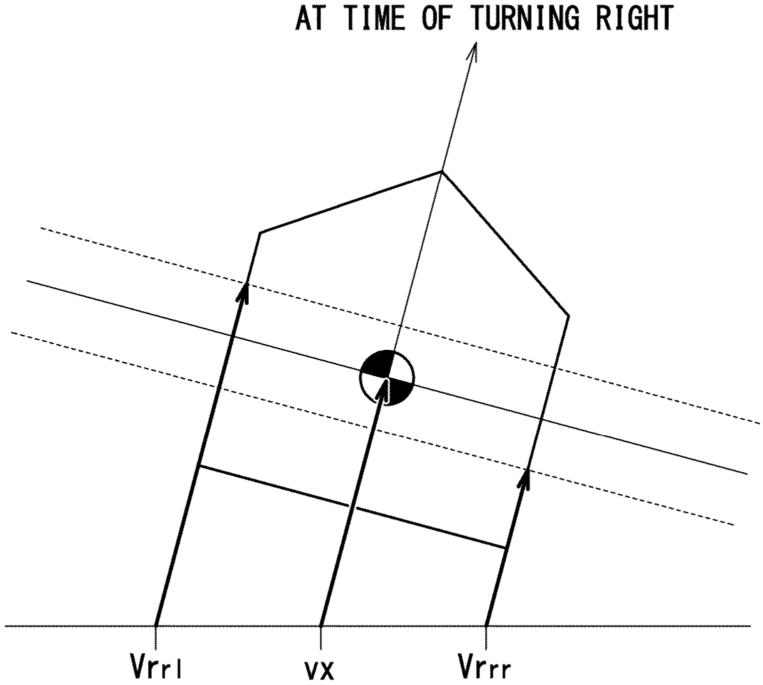

FIG. 13

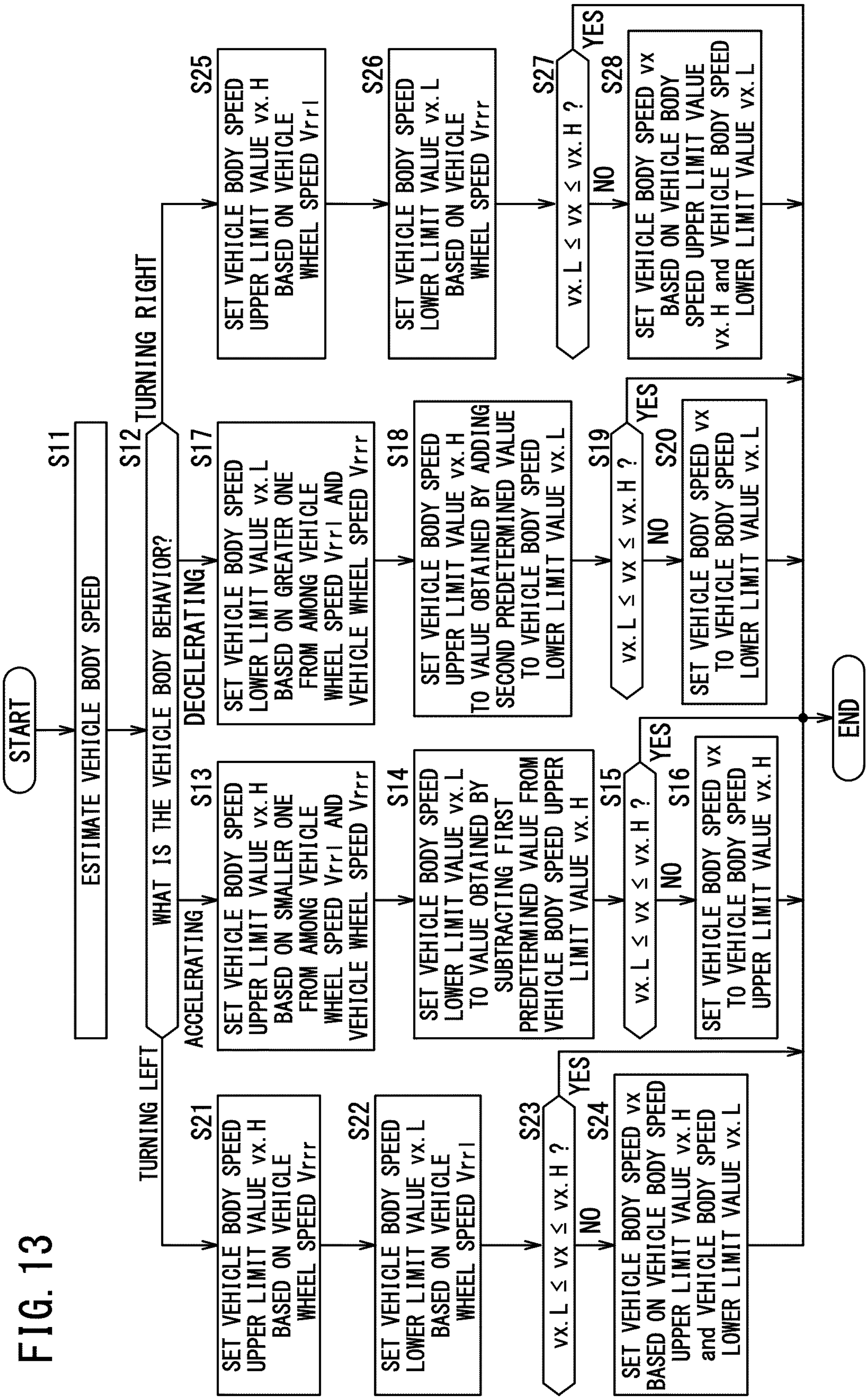
START
ESTIMATE VEHICLE BODY SPEED
S11
WHAT IS THE VEHICLE BODY BEHAVIOR?
S12
TURNING LEFT
ACCELERATING
DECELERATING
TURNING RIGHT
SET VEHICLE BODY SPEED UPPER LIMIT VALUE vx.H BASED ON VEHICLE WHEEL SPEED Vrrr
S21
SET VEHICLE BODY SPEED LOWER LIMIT VALUE vx.L BASED ON VEHICLE WHEEL SPEED Vrrl
S22
vx.L ≤ vx ≤ vx.H ?
S23
YES
NO
SET VEHICLE BODY SPEED vx BASED ON VEHICLE BODY SPEED UPPER LIMIT VALUE vx.H and VEHICLE BODY SPEED LOWER LIMIT VALUE vx.L
S24
SET VEHICLE BODY SPEED UPPER LIMIT VALUE vx.H BASED ON SMALLER ONE FROM AMONG VEHICLE WHEEL SPEED Vrrl AND VEHICLE WHEEL SPEED Vrrr
S13
SET VEHICLE BODY SPEED LOWER LIMIT VALUE vx.L TO VALUE OBTAINED BY SUBTRACTING FIRST PREDETERMINED VALUE FROM VEHICLE BODY SPEED UPPER LIMIT VALUE vx.H
S14
vx.L ≤ vx ≤ vx.H ?
S15
YES
NO
SET VEHICLE BODY SPEED vx TO VEHICLE BODY SPEED UPPER LIMIT VALUE vx.H
S16
SET VEHICLE BODY SPEED LOWER LIMIT VALUE vx.L BASED ON GREATER ONE FROM AMONG VEHICLE WHEEL SPEED Vrrl AND VEHICLE WHEEL SPEED Vrrr
S17
SET VEHICLE BODY SPEED UPPER LIMIT VALUE vx.H TO VALUE OBTAINED BY ADDING SECOND PREDETERMINED VALUE TO VEHICLE BODY SPEED LOWER LIMIT VALUE vx.L
S18
vx.L ≤ vx ≤ vx.H ?
S19
YES
NO
SET VEHICLE BODY SPEED vx TO VEHICLE BODY SPEED LOWER LIMIT VALUE vx.L
S20
SET VEHICLE BODY SPEED UPPER LIMIT VALUE vx.H BASED ON VEHICLE WHEEL SPEED Vrrl
S25
SET VEHICLE BODY SPEED LOWER LIMIT VALUE vx.L BASED ON VEHICLE WHEEL SPEED Vrrr
S26
vx.L ≤ vx ≤ vx.H ?
S27
YES
NO
SET VEHICLE BODY SPEED vx BASED ON VEHICLE BODY SPEED UPPER LIMIT VALUE vx.H and VEHICLE BODY SPEED LOWER LIMIT VALUE vx.L
S28
END

## INTERNATIONAL SEARCH REPORT

International application No.
**PCT/JP2024/011907**

### A. CLASSIFICATION OF SUBJECT MATTER

***B60L 15/20***(2006.01)i; ***B60L 9/18***(2006.01)i
FI: B60L15/20 S; B60L9/18 P

According to International Patent Classification (IPC) or to both national classification and IPC

### B. FIELDS SEARCHED

Minimum documentation searched (classification system followed by classification symbols)

B60L15/20; B60L9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-115006 A (KANZAKI KOKYUKOKI MANUFACTURING CO., LTD.) 09 June 2011 (2011-06-09)<br>paragraphs [0031]-[0075], fig. 1-10 | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/011907**

| Patent document cited in search report | Publication date (day/month/year) | Patent family member(s) | Publication date (day/month/year) |
|---|---|---|---|
| JP 2011-115006 A | 09 June 2011 | US 2011/0127093 A1 paragraphs [0057]-[0101], fig. 1-10 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8838311 B2